# EUROPÄISCHE PATENTSCHRIFT

(11) **EP 4 469 519 B1**
(45) Veröffentlichungstag und Bekanntmachung des Hinweises auf die Patenterteilung: **27.08.2025**
(21) Anmeldenummer: 22709590.8
(22) Anmeldetag: 28.01.2022
(51) Int. Cl.: C08L 83/04, C08K 3/08

(54) **ALUMINIUMHALTIGE WÄRMELEITPASTEN**
ALUMINUM-CONTAINING THERMAL PASTES
PÂTES THERMIQUES CONTENANT DE L'ALUMINIUM

(43) Veröffentlichungstag der Anmeldung: 04.12.2024
(73) Patentinhaber: Wacker Chemie AG, 81671 München (DE)
(72) Erfinder: KNÖR, Sebastian, 84547 Emmerting (DE)
(74) Vertreter: Mieskes, Klaus Theoderich
(86) Internationale Anmeldenummer: PCT/EP2022/052024
(87) Internationale Veröffentlichungsnummer: WO 2023/143728

(56) Entgegenhaltungen:
- WO-A1-2021/079714
- US-A1- 2011 163 460

## Beschreibung

Die vorliegende Erfindung betrifft wärmeleitfähige Siliconzusammensetzungen, deren Herstellung und Verwendung.

### Stand der Technik

Wärmeleitfähige Siliconzusammensetzungen finden breite Anwendung für das Thermomanagement in der Automobil- und Elektronikindustrie. Wichtige Darreichungsformen umfassen beispielsweise wärmeleitfähigen Klebstoffe, Wärmeleitpads, Gap Filler und Vergussmassen. Von den genannten Anwendungen stellen Gap Filler für Lithium-Ionen-Batterien von Elektrofahrzeugen volumenmäßig die mit Abstand größte Anwendung dar. Gap-Filler sind wärmeleitfähige Elastomere, die durch Fertigungstoleranzen, Bauhöhenunterschiede oder unterschiedliche Ausdehnungskoeffizienten hervorgerufene Luftspalten vollständig und dauerhaft füllen und den thermischen Widerstand beispielsweise zwischen elektronischen Bauteilen und Kühlgehäusen oder Kühlkörpern minimieren.

Der Stand-der-Technik kennt unterschiedliche thermoleitfähige Füllstoffe, die zur Erhöhung der Wärmeleitfähigkeit dem Silicon zugesetzt werden. Diese weisen jedoch gravierende Nachteile auf. Keramische Füllstoffe, wie beispielsweise Aluminiumoxid, haben eine sehr hohe Dichte und erhöhen damit das Gewicht der Bauteile sehr stark. Außerdem sind sie vergleichsweise teuer. Viele wärmeleitfähige metallische Füllstoffe, beispielsweise feinteilige Kupfer- und Silberpartikel sind aufgrund ihrer hohen Dichte und Kosten ebenfalls nicht für Gap Filler geeignet.

Auch viele weitere, hoch wärmeleitfähige Füllstoffe, wie beispielsweise Carbonanotubes, Bornitrid und Aluminiumnitrid, können, aufgrund ihres vergleichsweise hohen Preises, nur eingeschränkt, in geringen Mengen oder speziellen Anwendungen verwendet werden.

Der Stand der Technik kennt verschiedene wärmeleitfähige Siliconzusammensetzungen, die Aluminiumpartikel als wärmeleitfähigen Füllstoff enthalten. Diese sind vergleichsweise leicht und kostengünstig. Zudem besitzt Aluminium als Halbleiter eine äußerst gering elektrische Leitfähigkeit. Allerdings sind die Aluminiumpartikel nach dem Stand-der-Technik nicht für die Verwendung als Gap Filler in Lithium-Ionen-Batterien für Elektrofahrzeuge geeignet:
Im Stand der Technik werden sehr feinteilige Aluminiumpartikel mit einer mittleren Partikelgröße von unter 20 µm eingesetzt. Die Verwendung von Aluminiumpartikel kleiner 20 µm ist nachteilig, denn solch kleine Partikel weisen eine vergleichsweise geringe Mindestzündenergie auf und sind dadurch staubexplosionsgefährlich und erfordern aufwändige und kostenintensive Sicherheitsvorkehrungen in der betrieblichen Verarbeitung. Zudem erfüllen Gap Filler, welche solch feinteiligen Aluminiumpartikel nicht das erforderliche Brandverhalten gemäß UL94 V-0.

Nachteilig an sehr feinen Aluminiumpartikel oder gemahlenen Aluminiumpartikel ist außerdem, dass solche Partikel eine vergleichsweise große Oberfläche haben und sehr viel Polymer binden. Dadurch erhöht sich die Viskosität der Siliconzusammensetzung sehr stark, so dass nur Mischungen mit vergleichsweise niedrigen Füllgraden und niedriger Wärmeleitfähigkeit erzeugt werden können. Bei höheren Füllgraden wird die Zusammensetzung sehr steif und kann mit klassischen Verfahren, wie z.B. Dispenser, nicht mehr verarbeitet werden. Auch zeigt sich, dass Siliconzusammensetzungen enthaltend gemahlene Aluminiumpartikel vergleichsweise stark brennbar sind.

Es gibt zahlreiche Patentschriften, die die Verwendung von feinteiligen Aluminiumpartikeln in wärmeleitfähigen Siliconzusammensetzungen offenbaren, beispielsweise in US2007167564, US2002014692, US2003049466, US2018022977, JP2014037460, WO21079714, US2011163460, US2016208156, JP2010013521, JP2014037460, US2016060462 und US2016068732. In keiner dieser Schriften sind Offenbarungen zur Form der Partikel zu finden und es erfolgt lediglich eine sehr breite Definition der mittleren Partikeldurchmesser. Die konkreten Beispiele offenbaren die Verwendung von sehr feinen Aluminiumpartikel <20 µm.

Diese Verwendung sehr kleiner Aluminiumpartikeln <20 µm ist jedoch mit einem großen Nachteil verbunden. Da sie eine vergleichsweise geringe Mindestzündenergie aufweisen und dadurch staubexplosionsgefährlich sind , erfordern sie aufwändige und kostenintensive Sicherheitsvorkehrungen in der betrieblichen Verarbeitung. Zudem erfüllen Siliconzusammensetzungen, welche solch feinteiligen Aluminiumpartikel enthalten, nicht das erforderliche Brandverhalten gemäß UL94 V-0 und sind deswegen nicht für die Verwendung als Gap Filler in Lithium-Ionen-Batterien geeignet. Nachteilig ist zudem, dass solche feinteiligen Aluminiumpartikel eine große Oberfläche haben und sehr viel Polymer binden. Dadurch erhöht sich die Viskosität der Siliconzusammensetzung sehr stark. Es können nur Mischungen mit vergleichsweise niedrigen Füllgraden und niedriger Wärmeleitfähigkeit erzeugt werden.

US2017002248 beansprucht Thermal Interface Materialien mit einer hohen Wärmeleitfähigkeit von >6 W/mK und einem niedrigen Sekantenmodul der Elastizität. Es wird eine breite Auswahl möglicher Matrixmaterialien genannt (Thermoplaste, Duroplaste, Polymere). Es wird eine breite Auswahl möglicher thermisch leitfähiger Füllstoffe offenbart wie z.B. Metalloxide, -nitride oder Keramiken, darunter auch metallisches Aluminium, wobei keine nähere Spezifizierung der Form und Größe erfolgt. Die Beispiele offenbaren als Matrixmaterialien additionsvernetzbare Siliconzusammensetzung, Siliconöl und Mineralöl und als Füllstoff ausschließlich Kombinationen von Aluminiumoxid und metallisches Aluminium, wobei jeweils drei Typen Aluminiumoxid unterschiedlicher Größe und vier Typen Aluminium (Al-1: 150 µm, Al-2: 80 µm, Al-3: 5 µm, Al-4: 50 µm) unterschiedlicher Größe gemischt werden, wobei alle Typen sphärisch sind. Dabei ist der Gehalt an Aluminiumpartikel größer 42 Gew.-% und der Gehalt an Aluminiumoxidpartikel größer 37 Gew.-%. Der Anteil an zugegebenen kleinen Aluminiumpartikel < 20 µm (Partikel Beispiel Al-3) bezogen auf die Gesamtmenge an Aluminiumpartikel ist jeweils größer 20%. Die Zugabe und der Gehalt an sehr kleinen Aluminiumpartikel < 20 µm ist mit den genannten Nachteilen verbunden. Durch die Verwendung großer Mengen Aluminiumoxid sind solche Thermal Interface Materialien zudem sehr teuer in der Herstellung und weisen eine vergleichsweise hohe Dichte von größer 2,69 g/ml auf.

Aufgabe der vorliegenden Erfindung war daher die Bereitstellung wärmeleitfähiger Siliconelastomerzusammensetzungen, die die oben genannten Nachteile des Standes-der-Technik nicht zeigen, und die Eigenschaften einer geringen Dichte, niedriger Kosten und hoher Wärmeleitfähigkeit vereinen.

Diese Aufgabe wird durch die erfindungsgemäßen, vernetzbaren, wärmeleitfähigen Siliconzusammensetzungen (Y) gelöst, welche vergleichsweise große Aluminiumpartikel enthalten mit einer mittleren Partikelgröße von 20 bis 150 µm, mit überwiegend abgerundeter Oberflächenform, und die gleichzeitig eine besonders große bzw. breite Partikelverteilungsbreite aufweisen. Vollkommend überraschend wurde in Experimenten gefunden, dass diese erfindungsgemäßen Siliconzusammensetzungen (Y) eine deutlich reduzierte Brennbarkeit aufweisen.

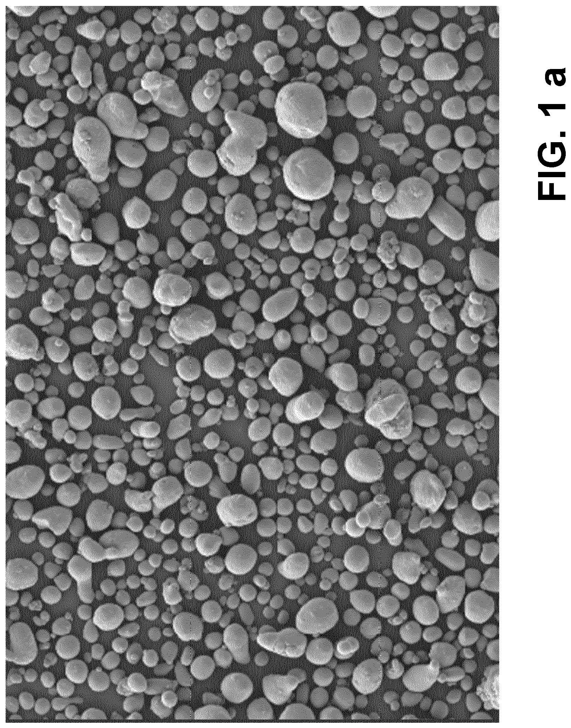

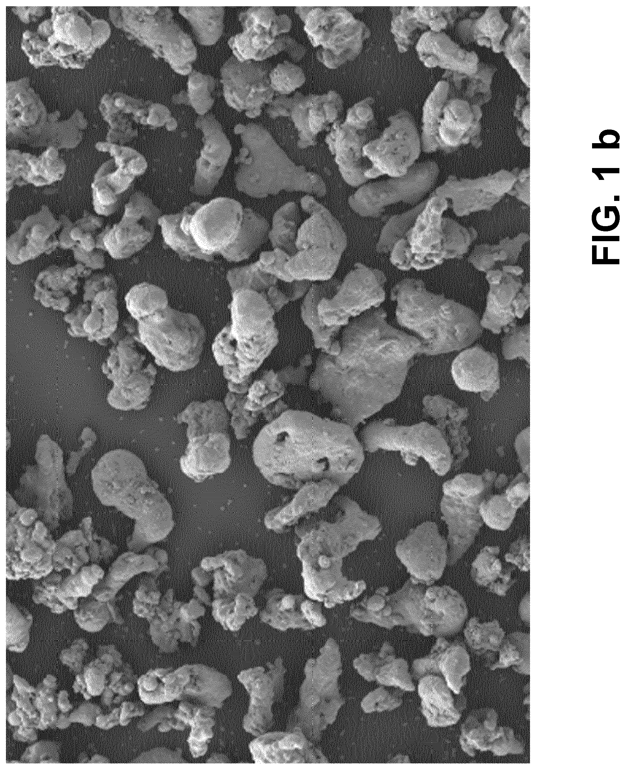

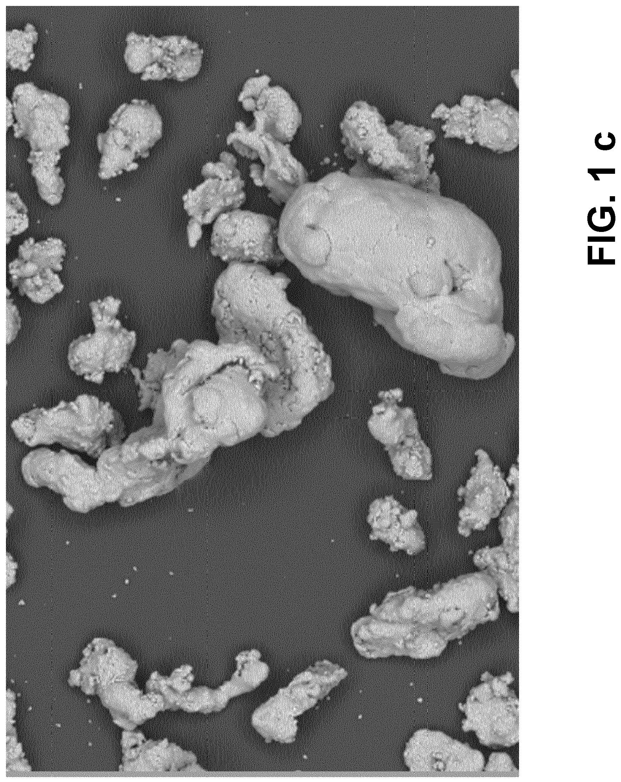

Als Aluminiumpartikel mit "überwiegend abgerundeter Oberflächenform" sind im Rahmen der vorliegenden Erfindung solche zu verstehen, die eine kugelige bis ovale, spratzige oder auch nodulare Form aufweisen mit gleichzeitig glatt und geschwungen verlaufenden Oberflächen. Figuren 1 a bis 1 c zeigen beispielhaft die erfindungsgemäße überwiegend abgerundete Oberflächenform dieser Aluminiumpartikel. Erfindungsgemäße Aluminiumpartikel mit überwiegend abgerundeter Oberflächenform werden über ein Schmelzverfahren hergestellt. D.h. die erfindungsgemäßen Aluminiumpartikel müssen im letzten Schritt der Erzeugung durch Erstarren aus einer Schmelze erhalten werden und nicht durch mechanische Zerkleinerung des festen Materials. Dies kann beispielsweise durch Plasmarundung oder durch die Zerstäubung der Schmelze (Atomisierung) erfolgen. Die Atomisierung ist dabei das bevorzugte Verfahren.

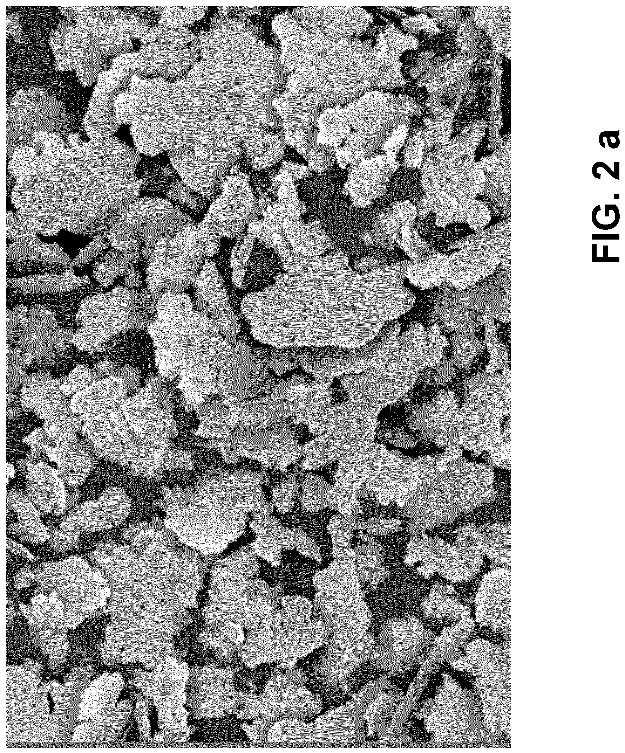

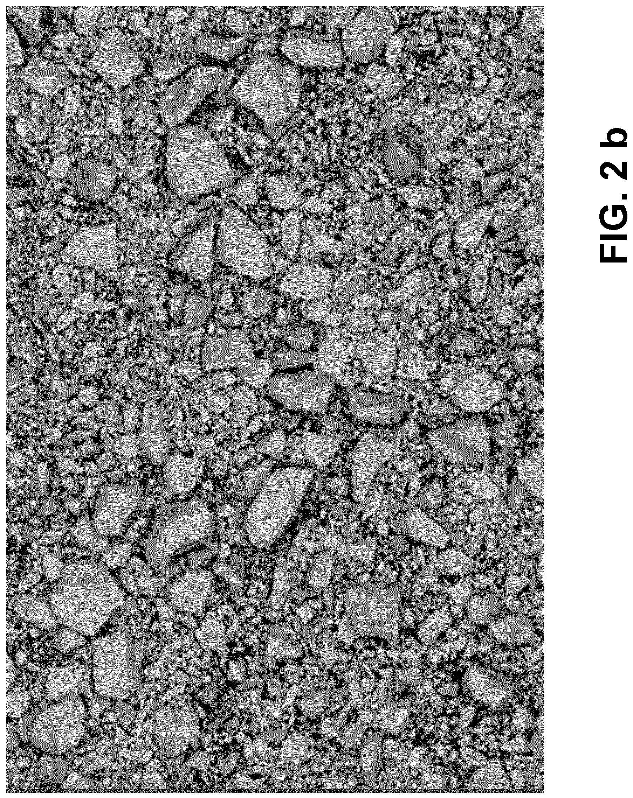

Nicht erfindungsgemäße Aluminiumpartikel-Formen zeigen beispielhaft die Figuren 2 a und 2 b mit kantigen und spitzen Partikeln. Diese werden mittels Mahl- oder Brech- oder Schleifverfahren erzeugt.

Erfindungsgemäße metallische Aluminiumpartikel mit überwiegend abgerundeter Oberflächenform sind somit weder kantig oder spitz. Sie können solche Partikel aber im Umfang einer Verunreinigung enthalten, ohne dass ihre erfindungsgemäße Wirkung gestört wird.

**Gegenstand der vorliegenden Erfindung ist** somit eine vernetzbare, wärmeleitfähige Siliconzusammensetzung (Y) enthaltend 5-50 Vol.-% einer vernetzbaren Siliconzusammensetzung (S) und 50-95 Vol.-% mindestens eines thermisch leitfähigen Füllstoffes (Z) mit einer Wärmeleitfähigkeit von mindestens 5 W/mK, mit der Maßgabe, dass
die vernetzbare, wärmeleitfähige Siliconzusammensetzung (Y) eine thermische Leitfähigkeit von mindestens 0,6 W/mK hat, und dass
mindestens 20 Vol-% metallische Aluminiumpartikel als thermisch leitfähige Füllstoffe (Z) enthalten sind, welche folgende Merkmale erfüllen:
   a) ihr mittlerer Durchmesser x50 liegt im Bereich 20-150 µm;
   b) sie sind im letzten Herstellschritt über ein Schmelzverfahren hergestellt und haben eine überwiegend abgerundete Oberflächenform,
   c) ihre Verteilungsbreite SPAN ((x90-x10)/x50) ist mindestens 0,40.

Im Rahmen dieser Erfindung sind die Begriffe wärmeleitfähig, thermoleitfähig oder thermisch leitfähig gleichbedeutend.

Als thermisch leitfähige Füllstoffe (Z), sind im Rahmen dieser Erfindung alle Füllstoffe mit einer thermischen Leitfähigkeit von mindestens 5 W/mK zu verstehen.

Als wärmeleitfähige Siliconzusammensetzung (Y) sind im Rahmen dieser Erfindung solche Siliconzusammensetzungen zu verstehen, die die thermische Leitfähigkeit eines Füllstoff- und Additivfreien Polydimethylsiloxans, typischerweise etwa 0.2 W/mK, deutlich übertreffen, dadurch gekennzeichnet, dass sie eine thermische Leitfähigkeit von mindestens 0,6 W/mK aufweisen.

Im Rahmen dieser Erfindung beziehen sich alle Parameter, die die Partikelgröße (Parameter: mittlerer Durchmesser x50) oder die Partikelgrößenverteilung (Parameter: Verteilungsbreite SPAN) beschreiben, auf eine volumenbezogene Verteilung. Die genannten Kennwerte können beispielsweise mittels dynamischer Bildanalyse gemäß ISO 13322-2 und ISO 9276-6 bestimmt werden, beispielsweise mit einem Camsizer X2 von Retsch Technology.

Um die Seitenzahl der Beschreibung der vorliegenden Erfindung nicht zu umfangreich zu gestalten, werden in der Beschreibung nur die bevorzugten Ausführungsformen der einzelnen Merkmale aufgeführt.

Der fachkundige Leser soll diese Art der Offenbarung aber explizit so verstehen, dass damit auch jede Kombination aus unterschiedlichen Bevorzugungsstufen explizit offenbart und explizit gewünscht ist.

### Vernetzbare Siliconzusammensetzung (S)

Als vernetzbare Siliconzusammensetzung (S) können dem Fachmann aus dem Stand der Technik bekannten Silicone verwendet werden, wie additionsvernetzende, peroxidisch vernetzende, kondensationsvernetzende oder strahlenvernetzende Siliconzusammmensetzungen (S). Bevorzugt werden additionsvernetzende oder peroxidisch vernetzende Siliconzusammensetzungen (S) verwendet.

Peroxidisch vernetzende Siliconzusammensetzungen (S) sind dem Fachmann seit langem bekannt. Sie enthalten im einfachsten Fall wenigstens ein Organopolysiloxan mit mindestens 2 vernetzungsfähigen Gruppen pro Molekül wie beispielsweise Methyl- oder Vinylgruppen und wenigstens einen geeigneten organischen Peroxid-Katalysator. Erfolgt die Vernetzung der erfindungsgemäßen Massen mittels freier Radikale, werden als Vernetzungsmittel organische Peroxide, die als Quelle für freie Radikale dienen, eingesetzt. Beispiele für organische Peroxide sind Acylperoxide, wie Dibenzoylperoxid, Bis-(4-chlorbenzoyl)-peroxid, Bis-(2,4-dichlorbenzoyl)-peroxid und Bis-(4-methylbenzoyl)-peroxid; Alkylperoxide und Arylperoxide, wie Di-tert.-butylperoxid, 2,5-Bis-(tert.-butylperoxy)-2,5-dimethylhexan, Dicumylperoxid und 1,3-Bis-(tert.-butylperoxy-isopropyl)-benzol; Perketale, wie 1,1-Bis-(tert.-butylperoxy)-3,3,5-trimethylcyclohexan; Perester, wie Diacetylperoxydicarbonat, tert.-Butylperbenzoat, Tert.-butylperoxy-isopropylcarbonat, Tert.-butylperoxy-isonona-noat, Dicyclohexylperoxydicarbonat und 2,5-Dimethyl¬hexan-2,5-diperbenzoat.

Es kann eine Art von organischem Peroxid, es kann auch ein Gemisch von mindestens zwei verschiedenen Arten von organischen Peroxiden eingesetzt werden.

Besonders bevorzugt werden additionsvernetzende Siliconzusammensetzungen (S) verwendet.

Erfindungsgemäß verwendete additionsvernetzende Siliconzusammensetzungen (S) sind im Stand der Technik bekannt und enthalten im einfachsten Fall
(A) mindestens eine lineare Verbindung, die Reste mit aliphatischen Kohlenstoff-Kohlenstoff-Mehrfachbindungen aufweist,
(B) mindestens ein lineares Organopolysiloxan mit Si-gebundenen Wasserstoffatomen,
   oder anstelle von (A) und (B)
(C) mindestens ein lineares Organopolysiloxan, welches SiC-gebundene Reste mit aliphatischen Kohlenstoff-Kohlenstoff Mehrfachbindungen und Si-gebundene Wasserstoffatome aufweist, und
(D) mindestens einen Hydrosilylierungskatalysator.

Bei den additionsvernetzenden Siliconzusammensetzungen (S) kann es sich um Einkomponenten-Siliconzusammensetzungen wie auch um Zweikomponenten-Siliconzusammensetzungen handeln.

Bei Zweikomponenten-Siliconzusammensetzungen (S) können die beiden Komponenten der erfindungsgemäßen, additionsvernetzenden Siliconzusammensetzungen (S) alle Bestandteile in beliebiger Kombination enthalten, im Allgemeinen mit der Maßgabe, dass eine Komponente nicht gleichzeitig Siloxane mit aliphatischer Mehrfachbindung, Siloxane mit Si-gebundenem Wasserstoff und Katalysator, also im Wesentlichen nicht gleichzeitig die Bestandteile (A), (B) und (D) bzw. (C) und (D) enthält.

Die in den erfindungsgemäßen, additionsvernetzenden Siliconzusammensetzungen (S) eingesetzten Verbindungen (A) und (B) bzw. (C) werden bekanntermaßen so gewählt, dass eine Vernetzung möglich ist. So weist beispielsweise Verbindung (A) mindestens zwei aliphatisch ungesättigte Reste auf und (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den oben genannten Verhältnissen aufweist. Auch sind Mischungen aus (A) und (B) und (C) mit den oben genannten Verhältnissen von aliphatisch ungesättigten Resten und Si-gebundenen Wasserstoffatomen möglich.

Die erfindungsgemäße additionsvernetzende Siliconzusammensetzung (S) enthält üblicherweise 30-99,0 Gew.%, bevorzugt 40-95 Gew.% und besonders bevorzugt 50-90 Gew.% (A). Die erfindungsgemäße additionsvernetzende Siliconzusammensetzung (S) enthält üblicherweise 1-70 Gew.%, bevorzugt 3-50 Gew.% und besonders bevorzugt 8-40 Gew.% (B). Falls die erfindungsgemäße additionsvernetzende Siliconzusammensetzung die Komponente (C) enthält, sind üblicherweise mindestens 30 Gew.%, bevorzugt mindestens 45 Gew.%, besonders bevorzugt mindestens 58 Gew.% (C) bezogen auf die Gesamtmenge an erfindungsgemäßer additionsvernetzender Siliconzusammensetzung (S) enthalten.

Bei der erfindungsgemäß eingesetzten Verbindung (A) kann es sich um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln oder auch um deren Mischungen.

Beispiele für siliciumfreie organische Verbindungen (A) sind, 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisoproppenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5 und 4,5-Dimethyl-4,5-diethyl-octadien-(1,7), N,N'-Methylen-bis-acrylsäureamid, 1,1,1-Tris(hydroxymethyl)-propan-triacrylat, 1,1,1-Tris(hydroxymethyl)propan-trimethacrylat, Tripropylenglykol-diacrylat, Diallylether, Diallylamin, Diallylcarbonat, N,N'-Diallylharnstoff, Triallylamin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykoldiacrylat, Polyethylenglykol Dimethacrylat, Poly(propylenglykol)methacrylat.

Vorzugsweise enthalten die erfindungsgemäßen additionsvernetzende Siliconzusammensetzungen (S) als Bestandteil (A) mindestens eine aliphatisch ungesättigte Organosiliciumverbindung, wobei alle bisher in additionsvernetzenden Zusammensetzungen verwendeten, aliphatisch ungesättigten Organosiliciumverbindungen eingesetzt werden können, wie beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Als Organosiliciumverbindungen (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel (I)

R⁴ₐR⁵_{b}SiO_{(4-a-b)/2} ( I)

eingesetzt, wobei
**R⁴** unabhängig voneinander, gleich oder verschieden, ein von aliphatischen Kohlenstoff-Kohlenstoff-Mehrfachbindungen freien, organischen oder anorganischen Rest,
**R⁵** unabhängig voneinander, gleich oder verschieden einen einwertigen, substituierten oder nicht substituierten, SiC-gebundenen Kohlenwasserstoffrest mit mindestens einer aliphatischen Kohlenstoff-Kohlenstoff-Mehrfachbindung,
a 0, 1, 2 oder 3 ist, und
b 0, 1 oder 2 ist
bedeuten,
mit der Maßgabe, dass die Summe a + b kleiner oder gleich 3 ist und mindestens 2 Reste R⁵ je Molekül vorliegen.

Bei Rest R⁴ kann es sich um ein- oder mehrwertige Reste handeln, wobei die mehrwertigen Reste, wie beispielsweise bivalente, trivalente und tetravalente Reste, dann mehrere, wie etwa zwei, drei oder vier, Siloxy-Einheiten der Formel (I) miteinander verbinden.

Weitere Beispiele für R⁴ sind die einwertigen Reste -F, -Cl, - Br, OR⁶, -CN, -SCN, -NCO und SiC-gebundene, substituierte oder nicht substituierte Kohlenwasserstoffreste, die mit Sauerstoffatomen oder der Gruppe -C(O)- unterbrochen sein können, sowie zweiwertige, beidseitig gemäß Formel (I) Si-gebundene Reste. Falls es sich bei Rest R⁴ um SiC-gebundene, substituierte Kohlenwasserstoffreste handelt, sind bevorzugte Substituenten Halogenatome, phosphorhaltige Reste, Cyanoreste, -OR⁶, -NR⁶-, - NR⁶₂, -NR⁶-C(O)-NR⁶₂, -C(O)-NR⁶₂, -C(O)R⁶, -C(O)OR⁶, -SO₂-Ph und - C₆F₅. Dabei bedeuten R⁶ unabhängig voneinander, gleich oder verschieden ein Wasserstoffatom oder einen einwertigen Kohlenwasserstoffrest mit 1 bis 20 Kohlenstoffatomen und Ph gleich dem Phenylrest.

Beispiele für Reste R⁴ sind Alkylreste, wie der Methyl-, Ethyl-, n-Propyl-, iso-Propyl-, n-Butyl-, iso-Butyl-, tert-Butyl-, n-Pentyl-, iso-Pentyl-, neo-Pentyl-, tert-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele für substituierte Reste R⁴ sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest, -(CH₂)-N(R⁶)C(O)NR⁶₂, -(CH₂)ₒ-C(O)NR⁶₂, -(CH₂)ₒ-C(O)R⁶, -(CH₂)ₒ-C(O)OR⁶, - (CH₂)ₒ-C(O)NR⁶₂, -(CH₂)-C(O)-(CH₂)ₚC(O)CH₃, -(CH₂)-O-CO-R⁶, -(CH₂)-NR⁶-(CH₂)ₚ-NR⁶₂, -(CH₂)ₒ-O-(CH₂)ₚCH (OH) CH₂OH, - (CH₂)ₒ(OCH₂CH₂)ₚOR⁶, -(CH₂)ₒ-SO₂-Ph und -(CH₂)ₒ-O-C₆F₅, wobei R⁶ und Ph der oben dafür angegebene Bedeutung entsprechen und o und p gleiche oder verschiedene ganze Zahlen zwischen 0 und 10 bedeuten.

Beispiele für R⁴ gleich zweiwertige, beidseitig gemäß Formel (I) Si-gebundene Reste sind solche, die sich von den voranstehend für Rest R⁴ genannten einwertigen Beispiele dadurch ableiten, dass eine zusätzliche Bindung durch Substitution eines Wasserstoffatoms erfolgt, Beispiele für derartige Reste sind - (CH₂)-, -CH(CH₃)-, -C(CH₃)₂-, -CH(CH₃)-CH₂-, -C₆H₄-, -CH(Ph)-CH₂-, -C(CF₃)₂-, -(CH₂)ₒ-C₆H₄-(CH₂)ₒ-, - (CH₂)ₒ-C₆H₄-C₆H₄-(CH₂)ₒ-, - (CH₂O)ₚ, (CH₂CH₂O)ₒ, -(CH₂)ₒ-Oₓ-C₆H₄-SO₂-C₆H₄-Oₓ-(CH₂)ₒ-, wobei x 0 oder 1 ist, und Ph, o und p die voranstehend genannte Bedeutung haben.

Bevorzugt handelt es sich bei Rest R⁴ um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest R⁵ kann es sich um beliebige, einer Anlagerungsreaktion (Hydrosilylierung) mit einer SiH-funktionellen Verbindung zugängliche Gruppen handeln.

Falls es sich bei Rest R⁵ um SiC-gebundene, substituierte Kohlenwasserstoffreste handelt, sind als Substituenten Halogenatome, Cyanoreste und -OR⁶ bevorzugt, wobei R⁶ die obengenannte Bedeutung hat.

Bevorzugt handelt es sich bei Rest R⁵ um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R⁴₃SiO_{1/2}, R⁵R⁴₂SiO_{1/2}, R⁵R⁴SiO_{1/2} und R⁴₂SiO_{2/2} zusammengesetzt, wobei R⁴ und R⁵ die vorstehend angegebene Bedeutung haben. Verzweigte und netzwerkartige Polysiloxane enthalten zusätzlich trifunktionelle und/oder tetrafunktionelle Einheiten, wobei solche der Formeln R⁴SiO_{3/2}, R⁵SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 10 bis 100 000 mPa•s, besonders bevorzugt von 15 bis 20 000 mPa•s, insbesondere bevorzugt 20 bis 2 000 mPa•s jeweils bei 25°C.

Als Organosiliciumverbindung (B) können alle hydrogenfunktionellen Organosiliciumverbindungen eingesetzt werden, die auch bisher in additionsvernetzbaren Zusammensetzungen eingesetzt worden sind.

Als Organopolysiloxane (B), die Si-gebundene Wasserstoffatome aufweisen, werden vorzugsweise lineare, cyclische oder verzweigte Organopolysiloxane aus Einheiten der allgemeinen Formel (III)

R⁴_{c}H_{d}SiO_{(4-c-d)/2} (III)

eingesetzt, wobei
**R⁴** die oben angegebene Bedeutung hat,
c 0,1,2 oder 3 ist und
d 0, 1 oder 2 ist,
mit der Maßgabe, dass die Summe von c + d kleiner oder gleich 3 ist und mindestens zwei Si gebundene Wasserstoffatome je Molekül vorliegen. Bevorzugt liegt mindestens ein Organopolysiloxan (B) mit mindestens drei, besonders bevorzugt mindestens vier Si gebundene Wasserstoffatome je Molekül vor.

Vorzugsweise enthält das erfindungsgemäß eingesetzte Organopolysiloxan (B) Si-gebundenen Wasserstoff im Bereich von 0,01 bis 1,7 Gewichtsprozent (Gew.%), bezogen auf das Gesamtgewicht des Organopolysiloxans (B), bevorzugt im Bereich 0,02-0,8 Gew.-%, besonders bevorzugt im Bereich 0,03-0,3 Gew.-%.

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständig oder endständig SiH-Gruppen verfügendes hochpolymeres Polydimethylsiloxan oder ein SiH-Gruppen aufweisendes Siliconharz.

Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane (B) sind vorzugsweise aus Einheiten der Formel R⁴₃SiO_{1/2}, HR⁴₂SiO_{1/2}, HR⁴SiO_{2/2} und R⁴₂SiO_{2/2} zusammengesetzt, wobei R⁴ die vorstehend angegebene Bedeutung hat. Verzweigte und netzwerkartige Polysiloxane enthalten zusätzlich trifunktionelle und/oder tetrafunktionelle Einheiten, wobei solche der Formeln R⁴SiO_{3/2}, HSiO_{3/2} und SiO_{4/2} bevorzugt sind, wobei R⁴ die vorstehend angegebene Bedeutung hat.

Selbstverständlich können auch Mischungen unterschiedlicher, den Kriterien des Bestandteils (B) genügender Siloxane eingesetzt werden. Besonders bevorzugt ist die Verwendung niedermolekularer SiH-funktioneller Verbindungen wie Tetrakis(dimethylsiloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan, oder analoge SiH-haltige Verbindungen, bei denen ein Teil der Methylgruppen durch 3,3,3-Trifluorpropyl- oder Phenylgruppen ersetzt ist.

Besonders bevorzugt als Bestandteil (B) ist die Verwendung SiH-haltiger, im wesentlichen linearer Poly(hydrogenmethyl)siloxane und Poly(dimethylhydrogenmethyl)siloxane, welche auch Hydrogendimethylsiloxy-terminiert sein können, mit einer Viskosität im Bereich von 1 bis 100 000 mPa•s , bevorzugt im Bereich 2 bis 1 000 mPa•s , besonders bevorzugt im Bereich 3 bis 750 mPa•s , insbesondere bevorzugt im Bereich 5 bis 500 mPa•s , jeweils bei 25 °C, und die Verwendung Hydrogendimethylsiloxy-terminierter Polydimethylsiloxanemit einer Viskosität von 10 bis 100 000 mPa•s, besonders bevorzugt von 15 bis 20 000 mPa•s, insbesondere bevorzugt 20 bis 2 000 mPa•s jeweils bei 25°C und Mischungen davon.

Bestandteil (B) ist vorzugsweise in einer solchen Menge in den erfindungsgemäßen vernetzbaren Siliconzusammensetzungen (S) enthalten, dass das Molverhältnis von SiH-Gruppen zu aliphatisch ungesättigten Gruppen aus (A) bei 0,1 bis 10, besonders bevorzugt zwischen 0,5 und 5,0, insbesondere zwischen 0,5 und 3 liegt.

Die erfindungsgemäß eingesetzten Komponenten (A) und (B) sind handelsübliche Produkte bzw. nach in der Chemie gängigen Verfahren herstellbar.

Anstelle von Komponente (A) und (B) können die erfindungsgemäßen Siliconzusammensetzungen (S) Organopolysiloxane (C), die gleichzeitig aliphatische Kohlenstoff-Kohlenstoff-Mehrfachbindungen und Si-gebundene Wasserstoffatome aufweisen, enthalten. Auch können die erfindungsgemäßen Siliconzusammensetzungen (S) alle drei Komponenten (A), (B) und (C) enthalten.

Falls Siloxane (C) eingesetzt werden, handelt es sich vorzugsweise um solche aus Einheiten der allgemeinen Formeln (IV), (V) und (VI)

R⁴_{f}SiO_{4/2} (IV)

R⁴_{g}R⁵SiO_{3-g/2} (V)

R⁴ₕHSiO_{3-h/2} (VI)

wobei
**R⁴** und **R⁵** die oben dafür angegebene Bedeutung haben
**f** 0, 1, 2 oder 3 ist,
**g** 0, 1 oder 2 ist und
**h** 0, 1 oder 2 ist,
mit der Maßgabe, dass je Molekül mindestens 2 Reste R⁵ und mindestens 2 Si-gebundene Wasserstoffatome vorliegen.

Beispiele für Organopolysiloxane (C) sind solche aus SO_{4/2}, R⁴₃SiO_{1/2}-, R⁴₂R⁵SiO_{1/2}- und R⁴₂HSiO_{1/2}- Einheiten, sogenannte MP-Harze, wobei diese Harze zusätzlich R⁴SiO_{3/2}- und R⁴₂SiO-Einheiten enthalten können, sowie lineare Organopolysiloxane im Wesentlichen bestehend aus R⁴₂R⁵SiO_{1/2}-, R⁴₂SiO- und R⁴HSiO-Einheiten mit R⁴ und R⁵ gleich der obengenannten Bedeutung.

Die Organopolysiloxane (C) besitzen vorzugsweise eine durchschnittliche Viskosität von 0,01 bis 500 000 Pa•s, besonders bevorzugt 0,1 bis 100 000 Pa•s jeweils bei 25°C. Organopolysiloxane (C) sind nach in der Chemie gängigen Methoden herstellbar.

Als Hydrosilylierungskatalysator (D) können alle dem Stand der Technik bekannten wärme- oder UV-härtenden Katalysatoren verwendet werden. Komponente (D) kann ein Platingruppenmetall sein, beispielsweise Platin, Rhodium, Ruthenium, Palladium, Osmium oder Iridium, eine metallorganische Verbindung oder eine Kombination davon. Beispiele für Komponente (D) sind Verbindungen wie Hexachloroplatin(IV)-säure, Platindichlorid, Platinacetylacetonat und Komplexe der besagten Verbindungen, die in einer Matrix oder einer kernschalenartigen Struktur eingekapselt sind. Zu den Platinkomplexen mit niedrigem Molekulargewicht der Organopolysiloxane gehören 1,3-Diethenyl-1,1,3,3-Tetramethyldisiloxan-Komplexe mit Platin. Weitere Beispiele sind Platinphosphitkomplexe oder Platinphosphinkomplexe. Für lichtoder UV-härtende Zusammensetzungen können beispielsweise Alkylplatinkomplexe wie Derivate von Cyclopentadienyltrimethylplatin(IV), Cyclooctadienyldimethylplatin(II) oder Diketonatokomplexe wie zum Beispiel Bisacetylacetonatoplatin(II) verwendet werden, um die Additionsreaktion mit Hilfe von Licht zu starten. Diese Verbindungen können in einer Harzmatrix eingekapselt sein.

Die Konzentration von Komponente (D) ist zum Katalysieren der Hydrosilylierungsreaktion der Komponenten (A) und (B) und (C) bei Einwirkung ausreichend, um die hier in dem beschriebenen Verfahren erforderliche Wärme zu erzeugen. Die Menge an Komponente (D) kann zwischen 0,1 und 1000 Teile pro Million (ppm), 0,5 und 100 ppm oder 1 und 25 ppm des Platingruppenmetalls betragen, je nach Gesamtgewicht der Komponenten. Die Härtungsrate kann gering sein, wenn der Bestandteil des Platingruppenmetalls bei unter 1 ppm liegt. Die Verwendung von mehr als 100 ppm des Platingruppenmetalls ist unwirtschaftlich oder setzt die Lagerstabilität der Siliconzusammensetzung herab.

Die additionsvernetzende Siliconzusammensetzungen (S) können optional alle weiteren Zusatzstoffe enthalten, die auch bisher zur Herstellung von additionsvernetzbaren Zusammensetzungen eingesetzt wurden. Beispiele für aktiv verstärkende Füllstoffe (E) die nicht unter die Definition der thermisch leitfähigen Füllstoffe (Z) fallen, die als Komponente in den erfindungsgemäßen additionsvernetzende Siliconzusammensetzungen (Y) eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe (E) können hydrophilen Charakter haben oder nach bekannten Verfahren hydrophobiert sein. Bevorzugte Füllstoffe (E) weisen infolge einer Oberflächenbehandlung einen Kohlenstoffgehalt von mindestens 0,01 bis maximal 20 Gew.%, bevorzugt zwischen 0.1 und 10 Gew.%, besonders bevorzugt zwischen 0,5 bis 6 Gew.% auf.

In der erfindungsgemäßen additionsvernetzenden Siliconzusammensetzung (S) wird der Bestandteil (E) bevorzugt als einzelne oder ebenfalls bevorzugt als eine Mischung mehrerer feinteiliger Füllstoffe verwendet. Der Gehalt der erfindungsgemäßen vernetzbaren Siliconzusammensetzungen (S) an aktiv verstärkendem Füllstoff liegt im Bereich von 0 bis 50 Gew.-%, vorzugsweise bei 0 bis 30 Gew.-%, bevorzugt bei 0 bis 10 Gew.-%.

Besonders bevorzugt sind die vernetzbaren additionsvernetzenden Siliconzusammensetzungen (S) dadurch gekennzeichnet, dass der Füllstoff (E) oberflächenbehandelt ist. Die Oberflächenbehandlung wird durch die im Stand der Technik bekannten Verfahren zur Hydrophobierung feinteiliger Füllstoffe E erzielt.

Die erfindungsgemäße additionsvernetzende Siliconzusammensetzung (S) kann Alkyl-trialkoxysilane (F) als weitere Zusätze enthalten, um deren Viskosität zu verringern. Sind sie enthalten so dann vorzugsweise zu 0,1-8 Gew.-%, bevorzugt 0,2-6 Gew.-%, bezogen auf die Gesamtmasse an Siliconzusammensetzung (S), wobei die Alkylgruppe eine gesättigte oder ungesättigte, lineare oder verzweigte Alkylgruppe mit 2 bis 20, bevorzugt 8-18 C-Atomen sein kann, und die Alkoxygruppen können 1 bis 5 Kohlenstoffatome aufweisen. Beispiele für die Alkoxygruppen umfassen Methoxygruppen, Ethoxygruppen, Propoxygruppen und Butoxygruppen, wobei Methoxygruppen und Ethoxygruppen besonders bevorzugt sind. Bevorzugt ist für (F) das n-Octyl-trimethoxysilan, n-Decyl-trimethoxysilan, n-Dodecyl-trimethoxysilan, n-Hexadecyltrimethoxysilan und das n-Octadecyl-trimethoxysilan.

Die erfindungsgemäße additionsvernetzende Siliconzusammensetzung (S) kann wahlweise als Bestandteile weitere Zusätze zu einem Anteil von bis zu 70 Gew.%, vorzugsweise bis zu 42 Gew.%, jeweils bezogen auf die erfindungsgemäße additionsvernetzende Siliconzusammensetzung (S) enthalten, welche sich von den erfindungsgemäßen thermisch leitfähigen Füllstoffen (Z) sowie den Zusätzen (E) und (F) unterscheiden. Diese Zusätze können z.B. inaktive Füllstoffe, harzartige Polyorganosiloxane, die von den Siloxanen (A), (B) und (C) verschieden sind, nicht verstärkende Füllstoffe, Fungizide, Duftstoffe, rheologische Additive, Korrosionsinhibitoren, Oxidationsinhibitoren, Lichtschutzmittel, flammabweisend machende Mittel und Mittel zur Beeinflussung der elektrischen Eigenschaften, Dispergierhilfsmittel, Haftvermittler, Pigmente, Farbstoffe, Weichmacher, organische Polymere, Hitzestabilisatoren usw. sein.

### Thermisch leitfähiger Füllstoff (Z)

Die erfindungsgemäße vernetzbare wärmeleitfähige Siliconzusammensetzung (Y) enthält mindestens einen thermisch leitfähigen Füllstoff (Z) mit einer Wärmeleitfähigkeit von mindestens 5 W/mK, mit der Maßgabe, dass die vernetzbare wärmeleitfähige Siliconzusammensetzungen (Y) mindestens 20 Vol-% metallische Aluminiumpartikel als thermisch leitfähige Füllstoffe (Z) enthalten, welche noch mindestens die weiteren speziellen Merkmale a) bis c) erfüllen müssen, und die Gesamtmenge thermisch leitfähiger Füllstoffe (Z) mindestens 50 Vol.-% beträgt.
a) Der mittlere Durchmesser x50 dieser erfindungsgemäßen metallischen Aluminiumpartikel (Z) liegt im Bereich 20 - 150 µm, vorzugsweise im Bereich 30 - 140 µm, bevorzugt im Bereich 40 - 130 µm, besonders bevorzugt im Bereich 50 - 125 µm.
b) Die erfindungsgemäßen metallischen Aluminiumpartikel (Z) werden im letzten Herstellschritt über ein Schmelzverfahren hergestellt und haben dadurch eine überwiegend abgerundete Oberflächenform.
c) Die Verteilungsbreite der Partikelgröße (SPAN) ist definiert als SPAN = (x90 - x10) / x50. Der SPAN der erfindungsgemäßen metallischen Aluminiumpartikel (Z) ist mindestens 0,4, bevorzugt mindestens 0,5, besonders bevorzugt mindestens 0,6, insbesondere bevorzugt mindestens 0,7. In einer bevorzugten Ausführungsform liegt der SPAN zwischen 0,7 und 2,5, insbesondere zwischen 0,75 und 2.

Dabei ist es unerheblich, ob eine einzelne Fraktion von Aluminiumpartikel (Z) verwendet wird, deren SPAN im erfindungsgemäßen Bereich liegt, oder ob zwei oder mehrere Fraktionen von Aluminiumpartikeln gemischt werden und dadurch die erfinderische Partikelgrößenverteilungsbreite gemäß Merkmal c) der erfinderischen Aluminiumpartikel (Z) erreicht wird. Werden zwei oder mehrere Fraktionen von Aluminiumpartikeln gemischt, so kann dies vor dem Vermischen mit einer oder mehreren Komponenten der erfindungsgemäßen Zusammensetzung erfolgen, oder die Fraktionen von Aluminiumpartikeln können auch getrennt voneinander mit einer oder mehreren Komponenten der erfindungsgemäßen Zusammensetzung gemischt werden. Die Reihenfolge der Zugabe ist dabei egal.

Vorzugsweise werden maximal vier Fraktionen von Aluminiumpartikeln gemischt und so die erfindungsgemäße Verteilungsbreite erzielt, bevorzugt werden maximal drei Fraktionen von Aluminiumpartikeln gemischt und so die erfindungsgemäße Verteilungsbreite erzielt, besonders bevorzugt werden maximal zwei Fraktionen von erfindungsgemäßen Aluminiumpartikeln eingesetzt und so die erfindungsgemäße Verteilungsbreite erzielt, insbesondere bevorzugt wird nur ein einzelnes, erfindungsgemäßes Aluminiumpulver eingesetzt.

Metallisches Aluminium weist mehrere sehr vorteilhafte Eigenschaften für die Verwendung als thermoleitfähiger Füllstoff (Z) auf. Beispielsweise verbessert die außergewöhnlich hohe Wärmeleifähigkeit von Aluminiumpartikeln (Z) die Wärmeleitfähigkeit der daraus hergestellten thermoleitfähigen Siliconzusammensetzung (Y). Die niedrige Dichte der Aluminiumpartikel (Z) reduziert das Gewicht der Zusammensetzung und der daraus hergestellten Bauteile und hilft Kosten zu sparen. Die elektrische Leitfähigkeit kann, sofern die Anwendung es erfordert, gemäß den Verfahren nach dem Stand der Technik, beispielsweise durch Oxidation der Oberfläche, reduziert werden. Die niedrige Mohshärte der Aluminiumpartikel (Z) reduziert die Abrasion bei der Verarbeitung. Dem Fachmann ist verständlich, dass die genannten Vorteile mit abnehmender Reinheit des Aluminiums ganz oder teilweise verloren gehen. Die Reinheit der erfindungsgemäßen Aluminiumpartikel (Z) und damit der Gehalt an Aluminium beträgt mindestens 80%, bevorzugt mindestens 90%, besonders bevorzugt mindestens 95%.

Dem Fachmann ist ferner bekannt, dass metallische Aluminiumpartikel unter bestimmten Bedingungen brennbar und die Stäube explosionsgefährlich sind. Der Fachmann weiß auch, dass die Gefahr der Staubbildung, die Brennbarkeit und Explosionsgefährlichkeit von Metallpulvern mit abnehmender Partikelgröße stark zunimmt. Aus diesem Grund sind sehr kleine Aluminiumpartikel unter 20 µm für viele Anwendungen, beispielsweise als Füllstoff für Gap Filler in Lithium-Ionen-Batterien, nicht geeignet. Solche Partikel sind aufgrund der niedrigen Mindestzündenergie gefährlich in der Handhabung und erfordern aufwändige und kostenintensive Sicherheitsvorkehrungen in der betrieblichen Verarbeitung. Ferner zeigte sich, dass Zusammensetzungen, die sehr kleine Aluminiumpartikel unter 20 µm enthalten, vergleichsweise stark brennbar sind und nicht die Brennbarkeitsklasse UL94 V-0 für Gap Filler in Lithium-Ionen-Batterien erfüllen.

Die erfindungsgemäßen Aluminiumpartikel (Z) enthalten vorzugsweise weniger als 20 Gew.-%, bevorzugt weniger als 15 Gew.-%, besonders bevorzugt weniger als 10 Gew.-% einer Partikelfraktion mit einem Durchmesser von kleiner oder gleich 20 µm jeweils bezogen auf die Gesamtmenge an Aluminiumpartikel.

Die erfindungsgemäßen Aluminiumpartikel (Z) enthalten vorzugsweise weniger als 15 Gew.-%, bevorzugt weniger als 10 Gew.-%, besonders bevorzugt weniger als 5 Gew.-% einer Partikelfraktion mit einem Durchmesser von kleiner oder gleich 10 µm jeweils bezogen auf die Gesamtmenge an Aluminiumpartikel.

Vorzugsweise enthalten die erfinderischen Aluminiumpartikel (Z) höchstens 1,5 Gew.-% Aluminiumpartikel kleiner 2 µm, bevorzugt höchstens 1 Gew.-%, besonders bevorzugt höchstens 0,5 Gew.-%, jeweils bezogen auf die Gesamtmenge an Aluminiumpartikel. Insbesondere bevorzugte Aluminiumpartikel sind im Wesentlichen frei von Partikelfraktionen kleiner 2 µm.

In einer insbesondere bevorzugten Ausführungsform findet keine beabsichtigte Zugabe von Aluminiumpartikel mit einem mittleren Durchmesser von kleiner oder gleich 20 µm, besonders bevorzugt von kleiner oder gleich 10 µm, insbesondere von Aluminiumpartikel kleiner oder gleich 5 µm statt.

Größere Aluminiumpartikel mit einer mittleren Partikelgröße über 20 µm weisen eine vergleichsweise hohe Mindestzündenergie auf und sind daher in betrieblichen Prozessen einfacher und sicherer verarbeitbar. Dennoch erwiesen sich Zusammensetzungen, die nicht-erfindungsgemäße gemahlene, kantige Aluminiumpartikel größer 20 µm enthalten als vergleichsweise stark brennbar und erfüllten nicht die Brennbarkeitsklasse UL94 V-0 für Gap Filler in Lithium-Ionen-Batterien.

Aluminiumpartikel mit einer mittleren Partikelgröße von über 150 µm sind für viele Anwendungen von wärmeleitfähigen Siliconzusammensetzungen nicht geeignet, da solch großkörnige Aluminiumpartikel häufig nicht in die feinen Spalte passen, die beispielsweise mit Gap Filler auszufüllen sind. Ferner zeigt sich sehr unerwartet, dass auch solch großkörnige Aluminiumpartikel eine vergleichsweise hohe Brennbarkeit zeigen.

Vollkommen überraschend hat sich gezeigt, dass die erfindungsgemäßen vernetzbaren Siliconzusammensetzungen (Y) thermisch leitfähig und gleichzeitig schwer-brennbar sind, wenn sie erfindungsgemäße metallische Aluminiumpartikel (Z), welche gleichzeitig die Merkmale a) bis c) erfüllen, in den geforderten Mindestmengen enthalten.

Die erfindungsgemäße vernetzbare Siliconzusammensetzung (Y) enthält mindestens 20 Vol-% solcher metallischer Aluminiumpartikel (Z), vorzugsweise mindestens 25 Vol-%, bevorzugt mindestens 30 Vol-%, insbesondere bevorzugt mindestens 35 Vol-%. Enthält die Siliconzusammensetzung (Y) geringere Mengen metallischer Aluminiumpartikel (Z), so sind die gewünschten vorteilhaften Effekte des metallischen Aluminiums, beispielsweise der niedrigen Dichte und der hohen thermischen Leitfähigkeit, nicht mehr ausreichend gegeben.

Der Stand der Technik kennt verschiedene Methoden zur Erzeugung feinteiliger Metallpartikel. Die erfindungsgemäßen Aluminiumpartikel (Z) werden vorzugsweise aus einem geschmolzenen Zustand erzeugt, wodurch sie eine vergleichsweise glatte Oberfläche aufweisen und im Wesentlichen frei von Bruchstellen, scharfen Kanten und spitzen Ecken sind. Dadurch unterscheiden sie sich von herkömmlichen gemahlenen Partikeln, die beispielsweise mittels Brechen, Schleifen oder Mahlen in die finale Form gebracht wurden. Dabei ist es unerheblich, ob die Partikel in einem ersten Verfahrensschritt kalt zerkleinert werden, beispielsweise durch Mahlung, und anschließend durch Erhitzen über den Schmelzpunkt in eine schmelzflüssige Form gebracht werden, beispielsweise durch Hitzebehandlung in einer heißen Zone, beispielsweise mittels eins Plasmas, oder ob zunächst eine Aluminiumschmelze erzeugt und anschließend zerkleinert wird, beispielsweise durch Zerstäuben. Vorzugsweise werden die erfindungsgemäßen Aluminiumpartikel durch Sprühen oder Zerstäuben, auch Atomisieren genannt, einer Aluminiumschmelze und anschließendes Abkühlen in die erfindungsgemäße feste Form gebracht.

Geeignete Verfahren zur Erzeugung der erfindungsgemäßen Aluminiumpartikel (Z) sind dem Fachmann bekannt und werden beispielsweise beschrieben in Kapitel 2.2 in "Pulvermetallurgie: Technologien und Werkstoffe, Schatt, Werner, Wieters, Klaus-Peter, Kieback, Bernd, S. 5-48, ISBN 978-3-540-681112-0, E-Book: https://doi.org/10.1007/978-3-540-68112-0 2". und gleichzeitig die erfindungsgemäßen Merkmale a) bis c) erfüllen.

Vorzugsweise ist das Herstellverfahren der erfindungsgemäßen metallischen Aluminiumpartikel (Z) so auszuführen, dass die Partikel in ihrer erfindungsgemäßen überwiegend abgerundeten Oberflächenform anfallen und somit die Merkmale a) - c) erfüllen und im Wesentlichen frei sind von kantigen oder spitzen Partikeln. Die erstarrten Partikel können in einem anschließenden Verfahrensschritt gemäß gängiger Verfahren nach Größe getrennt werden, z.B. mittels Klassieren durch Sieben oder mittels Sichten. Bei diesen Verfahren können Agglomerate und verklebte Partikel getrennt werden, es werden jedoch im Wesentlichen keine Partikel zerstört.

Überwiegend abgerundet bzw. im Wesentlichen frei von bedeutet, dass die Anwesenheit solcher Partikel im Umfang einer Verunreinigung der erfindungsgemäßen Partikeln (Z) toleriert wird und deren erfindungsgemäße Wirkung nicht stört.

Die erfindungsgemäße vernetzbare Siliconzusammensetzung (Y) kann neben diesen metallischen Aluminiumpartikeln (Z) weitere wärmeleitfähige Füllstoffe (Z) mit Wärmeleitfähigkeit größer 5 W/mK enthalten. Beispiele für solche weitere wärmeleitfähige Füllstoffe (Z) sind Magnesiumoxid, metallisches Siliciumpulver, metallisches Silberpulver, Zinkoxid, Bornitrid, Aluminiumcarbid, Aluminiumnitrid, Aluminiumhydroxid, Aluminiumoxid, Grafit, usw. Bevorzugte weitere Füllstoffe sind Aluminiumpulver, Magnesiumoxid, Aluminiumhydroxid, Zinkoxid und Aluminiumoxid. Besonders bevorzugte Füllstoffe sind Zinkoxid, metallisches Siliciumpulver, Aluminiumhydroxid und Aluminiumoxid, wobei metallisches Siliciumpulver und Aluminiumhydroxid insbesondere bevorzugt ist. Die Form des weiteren Füllstoffs ist grundsätzlich nicht eingeschränkt. Die Partikel können beispielsweise sphärisch, ellipsoid, nadelförmig, röhrenförmig, plättchenförmig, faserförmig oder unregelmäßig geformt sein. Bevorzugt sind sie sphärische, ellipsoide oder unregelmäßig geformt. Der mittlere Durchmesser der weiteren wärmeleitfähigen Füllstoffe (Z) liegt vorzugsweise im Bereich 0,01 - 150 µm, bevorzugt im Bereich 0,1 - 100 µm, besonders bevorzugt im Bereich 0,2 - 80 µm, insbesondere im Bereich 0,4 - 60 µm

Füllstoffe mit sehr hoher Dichte sind nachteilig in der Anwendung, wie zum Beispiel in Flugzeugen und Elektrofahrzeugen, da sie das Gewicht der Bauteile, sehr stark erhöhen. Vorzugsweise haben die weiteren wärmeleitfähigen Füllstoffe (Z) eine Dichte von höchstens 6,0 g/cm³, bevorzugt höchstens 4,5 g/cm³, besonders bevorzugt höchstens 3,0 g/cm³.

Vorzugsweise enthält die erfindungsgemäße vernetzbare Siliconzusammensetzung (Y) weniger als 16 Gew.-%, bevorzugt weniger als 14 Gew.-%, besonders bevorzugt weniger als 12 Gew.-% eines weiteren wärmeleitfähigen Füllstoffs (Z) mit einer Dichte von größer 5,0 g/cm³. In einer insbesondere bevorzugten Ausführungsform ist die erfindungsgemäße vernetzbare Siliconzusammensetzung (Y) frei von weiteren wärmeleitfähigen Füllstoffen (Z) mit einer Dichte von größer 5,0 g/cm³.

Vorzugsweise enthält die erfindungsgemäße vernetzbare Siliconzusammensetzung (Y) weniger als 35 Gew.-%, bevorzugt weniger als 30 Gew.-%, besonders bevorzugt weniger als 25 Gew.-%, insbesondere bevorzugt weniger als 20 Gew.-% eines weiteren wärmeleitfähigen Füllstoffs (Z) mit einer Dichte von größer 3,0 g/cm³. In einer insbesondere bevorzugten Ausführungsform ist die erfindungsgemäße vernetzbare Siliconzusammensetzung (Y) frei von weiteren wärmeleitfähigen Füllstoffen (Z) mit einer Dichte von größer 3,0 g/cm³.

Bevorzugte erfindungsgemäße vernetzbare Siliconzusammensetzungen (Y) enthalten als thermoleitfähigen Füllstoff (Z) die erfindungsgemäßen metallischen Aluminiumpartikel als alleinigen thermoleitfähigen Füllstoff (Z) oder in Kombination mit bis zu zwei weiteren thermoleitfähigen Füllstoffen (Z). Verunreinigungen von bis zu 5% gelten dabei nicht als weiterer Füllstoff (Z).

Enthalten die bevorzugten erfindungsgemäßen Zusammensetzungen die erfindungsgemäßen metallischen Aluminiumpartikel (Z) als einzigen thermisch leitfähigen Füllstoff (Z) mit einer Wärmeleitfähigkeit größer 5 W/mK, wird vorzugsweise ein Rheologiemodifier oder Verdickungsmittel zugesetzt, welches das Absetzen des Füllstoffes verhindert. Geeignete Rheologiemodifier sind dem Fachmann bekannt, wobei hydrophobe Kieselsäure wie bspw. die Komponente (E) bevorzugt ist.

Die Gesamtmenge thermisch leitfähiger Füllstoffe (Z) in der erfindungsgemäßen vernetzbaren wärmeleitfähigen Siliconzusammensetzung (Y) ist 50-95 Vol.-%, vorzugsweise 60-90 Vol.-%, bevorzugt 65-88 Vol.-%. Enthält die Siliconzusammensetzung (Y) geringere Mengen an wärmeleitfähigen Füllstoff (Z), so ist keine ausreichende Wärmeleitfähigkeit gegeben, enthält die Siliconzusammensetzung (Y) größere Mengen an wärmeleitfähigen Füllstoff (Z), dann wird die Zusammensetzung (Y) schlecht verarbeitbar, da sie hochviskos oder sogar bröselig wird.

Die unvernetzten erfindungsgemäßen wärmeleitfähige Siliconzusammensetzungen (Y) weisen eine Wärmeleitfähigkeit von mindestens 0,6 W/mK, vorzugsweise mindestens 0,8 W/mK, bevorzugt mindestens 1,2 W/mK, insbesondere mindestens 1,5 W/mK auf.

Die Viskosität der unvernetzten erfindungsgemäßen thermoleitfähigen Siliconzusammensetzungen (Y) kann in einem sehr breiten Bereich variieren und an die Erfordernisse der Anwendung angepasst werden. Die Einstellung der Viskosität der unvernetzten erfindungsgemäßen thermoleitfähigen Siliconzusammensetzungen (Y) erfolgt vorzugsweise über den Gehalt an thermoleitfähigen Füllstoff (Z) und/oder die Zusammensetzung der Siliconzusammensetzung (S), gemäß den üblichen Methoden aus dem Stand der Technik. Diese sind dem Fachmann bekannt. Bevorzugt erfolgt die Einstellung der Viskosität über die Auswahl und Kombination der Komponenten (A), (B) und (C) und optionale Zugabe eines Rheologiemodifiers und/oder eines aktiven Füllstoffs (E) und/oder eines Alkyl-trialkoxysilane (F).

Die dynamische Viskosität der unvernetzten, thermoleitfähigen erfindungsgemäßen Siliconzusammensetzungen (Y) ist bevorzugt im Bereich 100 - 1 000 000 mPa•s , vorzugsweise im Bereich 1 000 - 750 000 mPa•s , besonders bevorzugt im Bereich 2 000 - 500 000 mPa•s, insbesondere höchstens 250 000 mPa•s, jeweils bei Scherrate D = 10 s⁻¹ und 25 °C.

Die Dichte der unvernetzten erfindungsgemäßen Siliconzusammensetzungen (Y) ist kleiner 3,5 g/cm³, vorzugsweise kleiner 3,0 g/cm³, bevorzugt kleiner 2,6 g/cm³, insbesondere kleiner 2,3 g/cm³.

Die erfindungsgemäßen Siliconzusammensetzungen sind überwiegend frei von flüchtigen organischen Lösemitteln, denn diese können brennbare Dämpfe bilden und / oder zu einem unerwünschten Schrumpf während oder nach dem Vernetzen führen. Überwiegend frei bedeutet, dass keine Lösemittel beabsichtigt zugegeben werden, sondern nur in geringen Mengen kleiner 0,1 Gew.-% als Verunreinigung der erfindungsgemäßen Bestandteile der erfindungsgemäßen Siliconzusammensetzungen enthalten sein können.

**Ein weiterer Gegenstand der vorliegenden Erfindung ist** ein Verfahren zur Herstellung der erfindungsgemäßen vernetzbaren Siliconzusammensetzungen (Y) durch Vermischen der einzelnen Komponenten.

Die Komponenten können nach den üblichen kontinuierlichen und diskontinuierlichen Verfahren des Standes der Technik gemischt werden. Als Mischvorrichtung sind alle bekannten Vorrichtungen geeignet. Beispiele hierfür sind uniaxiale oder biaxiale kontinuierlicher Mischer, Doppelwalzen, Ross-Mischer, Hobart-Mischer, Dental-Mischer, Planetenmischer, Kneter und Henschel-Mischer oder ähnliche Mischer. Vorzugsweise wird in einem Planetenmischer, einem Kneter oder einem kontinuierlichen Mischer gemischt. Die vernetzbaren Siliconzusammensetzung (Y) kann beim Mischen optional erwärmt werden, vorzugsweise wird in einem Temperaturbereich von 15 - 40 °C gemischt. Auch die Vorgehensweise zur Herstellung der bevorzugten additionsvernetzbaren Siliconzusammensetzungen (S) ist dem Fachmann bekannt. Grundsätzlich können die Komponenten in beliebiger Reihenfolge zugegeben werden. Beispielsweise können die Komponenten e) und optional g) vorgemischt werden und anschließend mit den Komponenten a) und/oder b) gemischt werden. Dabei kann die Mischung optional auch erwärmt und / oder evakuiert werden. Vorzugsweise wird mindestens eine Teilmenge von a) und das Alkoxysilan g) gemischt, anschließend der/die wärmeleitfähigen Füllstoffe (Z) eingemischt. Vorzugsweise findet die Herstellung ohne aktives Heizen statt.

In einer bevorzugten Ausführungsform findet keine beabsichtigte Zugabe von Aluminiumpartikel mit einem mittleren Durchmesser von kleiner oder gleich 20 µm, besonders bevorzugt von kleiner oder gleich 10 µm, insbesondere von Aluminiumpartikel kleiner oder gleich 5 µm statt, da dies in der technischen Produktion mit einem besonderen Sicherheitsrisiko verbunden ist.

Die erfindungsgemäße, vernetzbare Siliconzusammensetzung (Y) kann als ein-, zwei oder mehrkomponentige Mischung bereitgestellt werden. Beispiele sind zweikomponentige, wärmehärtbare Zusammensetzungen (Y) oder einkomponentige UV-vernetzbare Zusammensetzungen(Y). Dies ist dem Fachmann ebenfalls seit langem bekannt.

Die erfindungsgemäße vernetzbare Siliconzusammensetzung (Y) hat sehr gute Verarbeitungseigenschaften bezüglich Fluidität, Spaltfülleigenschaften und Schichtstärkenkontrolle und kann präzise aufgetragen werden.

Die Temperaturbedingung für die Härtung der bevorzugt durch Hydrosilylierungsreaktion härtbaren Siliconzusammensetzung (Y) ist nicht beschränkt und liegt typischerweise im Bereich von 20 bis 180 °C, vorzugsweise im Bereich von 20 bis 150 °C, bevorzugt im Bereich von 20 bis 80 °C.

**Ein weiterer Gegenstand der vorliegenden Erfindung** sind die durch Abfüllen oder Auftragen und anschließender Vernetzung/Härtung der vernetzbaren Siliconzusammensetzung erhaltenen Siliconprodukte. Die gehärteten Siliconprodukte (z.B. ein wärmeleitendes Element) zeigen eine ausgezeichnete Wärmeleitfähigkeit und exakte Schichtstärken.

Die Härte der vernetzten erfindungsgemäßen thermoleitfähigen Siliconzusammensetzungen (Y) kann in einem sehr breiten Bereich variieren und an die Erfordernisse der Anwendung angepasst werden. So werden beispielsweise für die Anwendung als Gap Filler vorzugsweise vergleichsweise weiche und flexible Produkte verwendet, während beispielsweise für die Anwendung als thermoleitfähiger Klebstoff vorzugsweise vergleichsweise harte und feste Produkte verwendet werden. Die Einstellung der Härte der vernetzten erfindungsgemäßen thermoleitfähigen Siliconzusammensetzungen (Y) erfolgt vorzugsweise über die Zusammensetzung der Siliconzusammensetzung (S), gemäß den üblichen Methoden aus dem Stand der Technik. Diese sind dem Fachmann bekannt. Bevorzugt erfolgt die Einstellung der Härte über die Auswahl und Kombination der Komponenten (A), (B) und (C) und optionale Zugabe eines verstärkenden Füllstoffs (E).

Die Härte des gehärteten Siliconproduktes liegt vorzugsweise im Bereich von 2 nach Shore 00-Methode bis 100 nach Shore A-Methode, bevorzugt im Bereich von 10 nach Shore 00-Methode bis 85 nach Shore A-Methode. Für die Anwendung als Gap Filler liegt die Härte der vernetzten erfindungsgemäßen thermoleitfähigen Siliconzusammensetzungen insbesondere bevorzugt im Bereich von 15 nach Shore 00-Methode bis 65 nach Shore A-Methode.

Die vernetzten Siliconprodukte weisen eine Wärmeleitfähigkeit von mindestens 0,6 W/mK, vorzugsweise mindestens 0,8 W/mK, bevorzugt mindestens 1,2 W/mK, insbesondere mindestens 1,5 W/mK auf.

**Ein weiterer Gegenstand der vorliegenden Erfindung ist** die Verwendung der vernetzbaren Siliconzusammensetzung als Gap Filler (=wärmeleitendes Element), Wärmeleitpad, wärmeleitfähige Klebstoffe und Vergussmassen. Insbesondere sind sie zur Verwendung als Gap Filler für Lithium-Ionen-Batterien von Elektrofahrzeugen geeignet und als Vergussmasse für elektronische Bauteile beispielsweise von Elektrofahrzeugen.

Die Dichte der vernetzten erfindungsgemäßen Siliconprodukte ist kleiner 3,5 g/cm³, vorzugsweise kleiner 3,0 g/cm³, bevorzugt kleiner 2,6 g/cm³, insbesondere kleiner 2,3 g/cm³.

Vorzugsweise entsprechen die vernetzten erfindungsgemäßen Siliconprodukte der Brennbarkeitsklasse UL94 V-0.

In einer bevorzugten Ausführungsform ist die Dichte der vernetzten erfindungsgemäßen Siliconprodukte kleiner 2,5 g/cm³, die Wärmeleitfähigkeit größer 1,8 W/mK und die Brennbarkeit erfüllt UL94 V-0, mit der Maßgabe, dass die dynamische Viskosität der unvernetzten erfindungsgemäßen Siliconzusammensetzungen kleiner 500 000 mPa•s, insbesondere kleiner 250 000 jeweils bei Scherrate D = 10 s⁻¹ und 25 °C ist.

In einer besonders bevorzugten Ausführungsform ist die Dichte der erfindungsgemäßen Siliconprodukte kleiner 2,3 g/cm³, die Wärmeleitfähigkeit größer 1,8 W/mK, bevorzugt größer 3,0 W/mK und die Brennbarkeit erfüllt UL94 V-0, mit der Maßgabe, dass die dynamische Viskosität der unvernetzten erfindungsgemäßen Siliconzusammensetzungen kleiner 500 000 mPa•s, insbesondere kleiner 250 000 jeweils bei Scherrate D = 10 s⁻¹ und 25 °C ist.

### Messmethoden

### Messung der Wärmeleitfähigkeit Lambda

Die Wärmeleitfähigkeit wird nach ASTM D5470-12 an einem TIM Tester (Steinbeis Transferzentrum Wärmemanagement in der Elektronik, Lindenstr. 13/1, 72141 Walddorfhäslach, Deutschland) bestimmt. Dabei wird der thermische Widerstand der Probe, die sich zwischen 2 Prüfzylindern befindet, durch einen konstanten Wärmefluss bestimmt. Über die Schichtdicke der Probe wird die effektive Wärmeleitfähigkeit berechnet.

Für die Messung wird die Probe mit Hilfe einer Schablone aufgetragen und die Messzylinder manuell auf eine Dicke von 1,9 - 2,0 mm zusammengefahren, danach überstehendes Material entfernt. Die Messung der Wärmeleitfähigkeit erfolgt bei konstantem Spalt von 1,8 - 1,6 - 1,4 - 1,2 - 1,0 mm. Auswertung erfolgt über eine integrierte Reporterstellung. Nach einer Plausibilitätsprüfung (Bestimmtheitsmaß der Gerade > 0,998) wird die thermische Leitfähigkeit Lambda als effektive Wärmeleitfähigkeit in W/(m*K) ausgegeben.

### Messung der dynamischen Viskosität

Die dynamische Viskosität wurde an einem Rheometer "MCR 302" der Fa. Anton Paar nach DIN EN ISO 3219: 1994 und DIN 53019 mittels einer Fließkurve mit folgenden Parametern gemessen: Messart: T/D; Temperatur: 25,0 °C; Messelement: PP25; Messspalt: 0,50 mm; Scherrate: 0,1 - 10 s⁻¹; Zeit: 120 sec; Messwerte: 30. Die Viskositätsangabe in Pa•s erfolgt als Interpolationswert bei einer Schergeschwindigkeit von D = 10 s⁻¹.

### Messung der Dichte

Die Dichte der unvernetzten, wärmeleitfähigen Siliconzusammensetzungen wurde gemäß ISO 1183, die Dichte der vernetzten, wärmeleitfähigen Siliconzusammensetzungen gemäß ISO 1184 ermittelt.

### Partikelgrößen- und Partikelformanalyse

Die Analyse der Partikelgröße (mittlerer Durchmesser x50) und der Partikelgrößenverteilung (Parameter: Verteilungsbreite SPAN) erfolgte mit einem Camsizer X2 von Retsch Technology (Messprinzip: Dynamische Bildanalyse) gemäß ISO 13322-2 und ISO 9276-6 (Art der Analyse: Trockenmessung von Pulvern und Granulaten; Messbereich: 0,8 µm - 30 mm; Druckluftdispergierung mit "X-Jet"; Dispergierdruck = 0,3 bar). Die Auswertungen erfolgten volumenbasiert nach dem Modell x_{c min}.

Die nachfolgenden Beispiele beschreiben die prinzipielle Ausführbarkeit der vorliegenden Erfindung, ohne jedoch diese auf die darin offenbarten Inhalte zu beschränken.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

### Beispiele

### Übersicht der verwendeten erfindungsgemäßen und nicht-erfindungsgemäßen Aluminiumpulver und Aluminiumpulver-Mischungen

In Tabelle 1 sind die Eigenschaften der in den Beispielen verwendeten erfindungsgemäßen und nicht-erfindungsgemäßen Aluminiumpulver zusammengefasst.

Die erfindungsgemäßen Beispiele 1-6 und 8 verwenden erfindungsgemäßes Aluminiumpulver, welche mittels Inertgasatomisierung gewonnen wurde, und damit eine überwiegend abgerundete Oberflächenform hat, und zudem eine vergleichsweise breite, erfindungsgemäße Partikelgrößenverteilung aufweist.

Die nicht-erfindungsgemäßen Vergleichsbeispiele V1-V4 verwenden nicht-erfindungsgemäße Aluminiumpulver, welche mittels Inertgasatomisierung gewonnen wurden, und damit überwiegend abgerundet sind, jedoch eine vergleichsweise schmale, nicht-erfindungsgemäße Partikelgrößenverteilung aufweisen und das erfindungsgemäße Merkmal c) nicht erfüllen.

Die nicht-erfindungsgemäßen Vergleichsbeispiele V5-V7 verwenden nicht-erfindungsgemäße Aluminiumpulver, welche eine vergleichsweise breite Partikelgrößenverteilung aufweisen, jedoch mittels Mahlverfahren gewonnen wurden, und damit im Wesentlich eckig und kantig sind und das erfindungsgemäße Merkmal b) nicht erfüllen.

Die nicht-erfindungsgemäßen Vergleichsbeispiele V9 und V10 verwenden nicht-erfindungsgemäße Aluminiumpulver, welche mittels Inertgasatomisierung gewonnen wurden, und damit überwiegend abgerundet sind, und zudem eine vergleichsweise breite Partikelgrößenverteilung aufweisen, jedoch ist die Partikelgröße vergleichsweise klein und das erfindungsgemäße Merkmal a) nicht erfüllt.

### Beispiel 7: Herstellung der Aluminiumpulver-Mischung 7 (erfindungsgemäß)

100 g des nicht-erfindungsgemäßen Aluminiumpulver aus Vergleichsbeispiel V2, 200 g des nicht-erfindungsgemäßen Aluminiumpulver aus Vergleichsbeispiel V3, 400 g eines nicht-erfindungsgemäßen Aluminiumpulvers, welches einen x50 von 106,2 µm und einen SPAN von 0,37 aufweist und mittels Inertgasatomisierung hergestellt und damit im Wesentlichen abgerundet ist, 200 g eines nicht-erfindungsgemäßen Aluminiumpulvers, welches einen x50 von 133,5 µm und einen SPAN von 0,27aufweist und mittels Inertgasatomisierung hergestellt und damit im Wesentlichen abgerundet ist, und 100 g des nicht-erfindungsgemäßen Aluminiumpulver aus Vergleichsbeispiel V4 werden mit einem handelsüblichen Laborrührwerk TYP RW 28 (IKA^{®}-Werke GmbH & CO. KG, 79219 Staufen, Deutschland) homogen vermischt. Man erhält eine erfindungsgemäße Aluminiumpulver-Mischung, welches einen x50 von 107,4 µm und einen SPAN von 0,75aufweist und im Wesentlichen abgerundet ist, und die erfindungsgemäßen Merkmale a)-c) erfüllt.

### Vergleichsbeispiel V8: Herstellung der Aluminiumpulver-Mischung V8 (nicht-erfindungsgemäß)

300 g eines nicht-erfindungsgemäßen Aluminiumpulvers, welches einen x50 von 133,5 µm und einen SPAN von 0,27 aufweist und mittels Inertgasatomisierung hergestellt und damit im Wesentlichen abgerundet ist, und 600 g des nicht-erfindungsgemäßen Aluminiumpulver aus Vergleichsbeispiel V4 werden mit einem handelsüblichen Laborrührwerk TYP RW 28 (IKA^{®}-Werke GmbH & CO. KG, 79219 Staufen, Deutschland) homogen vermischt. Man erhält eine nicht-erfindungsgemäße Aluminiumpulver-Mischung, welche einen x50 von 155,0 µm und einen SPAN von 0,41 aufweist und das erfindungsgemäße Merkmal a) nicht erfüllt.

### Abkürzungen

- Bsp.: Beispiel
- V: Vergleichsbeispiel
- PF: Partikelform
- r: überwiegend abgerundete Oberflächenform
- e: eckig
- E: erfindungsgemäß
- NE: nicht erfindungsgemäß
- n.b.: nicht bestimmt

**Tabelle 1: Übersicht der verwendeten Aluminiumpulver**

| **Bsp.** | **x10 (µm)** | **x50 (µm)** | **x90 (µm)** | **SPAN** | **PF** | **Bemerkung** |
|---|---|---|---|---|---|---|
| | | **Merkmal a)** | | **Merkmal c)** | **Merkmal b)** | |
| **1** | 16,1 | 31,5 | 44,8 | 0,91 | r | E |
| **2** | 17,8 | 35,8 | 53,3 | 0,99 | r | E |
| **3** | 21,6 | 48,5 | 69,3 | 0,98 | r | E |
| **4** | 28,8 | 65,8 | 94,6 | 1,00 | r | E |
| **5** | 55,9 | 81,5 | 126 | 0,86 | r | E |
| **6** | 99,5 | 135,6 | 168,9 | 0,51 | r | E |
| **7** | 71,9 | 107,1 | 152,4 | 0,75 | r | E |
| **8** | 47,2 | 73,1 | 115,8 | 0,94 | r | E |
| **v1** | 43,5 | 50,9 | 63,2 | 0,39 | r | NE |
| **v2** | 60,5 | 68,3 | 75,4 | 0,22 | r | NE |
| **v3** | 71,8 | 81,8 | 91,6 | 0,24 | r | NE |
| **v4** | 146,2 | 161,5 | 180,4 | 0,21 | r | NE |
| **v5** | 9,9 | 37,4 | 83,6 | 1,97 | e | NE |
| **v6** | 19,5 | 94,8 | 188,3 | 1,78 | e | NE |
| **v7** | 2,8 | 6,1 | 9,1 | 1,03 | e | NE |
| **v8** | 122,3 | 155 | 185,1 | 0,41 | r | NE |
| **v9** | 3,2 | 6,0 | 8,7 | 0,92 | r | NE |
| **v10** | 6,2 | 14,7 | 23,1 | 1,15 | r | NE |

### Allgemeine Vorschrift 1 (AV1) zur Herstellung der vernetzten, thermoleitfähigen Aluminiumpulver-haltigen Siliconformköper (erfindungsgemäße Beispiele 9 bis 16 und nicht-erfindungsgemäße Beispiele V11 bis V23)

### Schritt 1: Herstellung einer additionsvernetzbaren, thermoleitfähigen Aluminiumpulver-haltigen Siliconzusammensetzung

24,5 g eines Vinyldimethylsiloxy-terminierten Polydimethylsiloxans, das eine Viskosität von 1000 mPa•s aufweist, 16,3 g eines Hydrogendimethylsiloxy-terminierten Polydimethylsiloxans, das eine Viskosität von 1000 mPa•s aufweist, 1,0 g eines Mischpolymerisats aus Dimethylsiloxy- und Methylhydrogensiloxy- und Trimethylsiloxy-Einheiten, das eine Viskosität von 200 mPa•s und einem Gehalt an Si-gebundenem Wasserstoff von 0,18 Gew.-% aufweist,
wurden mittels eines SpeedMixer DAC 400 FVZ (Hauschild & Co KG, Waterkamp 1, 59075 Hamm, Deutschland) bei einer Drehzahl von 2350 U/min für 25 Sekunden homogenisiert. Danach wurde jeweils ein Aluminiumpulver im Mengenverhältnis gemäß Tabelle 2 zugegeben und 25 Sekunden bei 2350 U/min mittels SpeedMixer gemischt. Die Aluminiumpartikel-haltige Siliconzusammensetzung wurde mit einem Spatel durchgerührt und dabei Aluminiumpulverreste vom Gefäßrand eingemischt. Anschließend wurde weitere 25 Sekunden bei 2350 U/min mittels SpeedMixer homogenisiert und auf Raumtemperatur abgekühlt.

Für die Vernetzung wurden 4,18 g ELASTOSIL^{®} CAT PT (zu beziehen bei Wacker Chemie AG, Hanns-Seidel-Platz 4, 81737 München, Germany) zugegeben, was einem Mischungsverhältnis von 1 Teil Katalysatorlösung auf 10 Teile Siliconzusammensetzung entspricht, wobei der Anteil an thermoleitfähigen Füllstoff (Z) nicht mitgerechnet wurde. Es wurde drei Mal für 10 Sekunden bei 2350 U/min mittels SpeedMixer gemischt, wobei die Probe zwischen den Mischvorgängen jeweils mit dem Spatel umgerührt wurde. Man erhält eine reaktive, pastöse Masse, die nur wenige Stunden lagerfähig ist und direkt weiterverarbeitet wurde.

### Schritt 2: Herstellung eines vernetzten, thermoleitfähigen Aluminiumpulver-haltigen Siliconformköpers

Die Herstellung eines Formkörpers mit den Maßen 207 mm x 207 mm x 2 mm erfolgte mittels Pressvulkanisation in einer Edelstahlform bei 165 °C und 380 N/cm² für 5 Minuten nach den üblichen Methoden gemäß dem Stand der Technik. Das Vulkanisat wurde anschließend bei 200 °C für 4 Stunden getempert. Man erhält einen homogenen und elastischen Formkörper.

### Beispiel 17 Brennbarkeitsprüfung

Die Brennbarkeitsprüfung erfolgt in einer vereinfachten Prüfung angelehnt an UL 94 V, ein Standard von Underwriters Laboratories zur Testung des senkrechten Verbrennens, der die Einstufung von Kunststoffen nach ihrer Flammwidrigkeit ermöglicht. Diese Methode ist die gängigste Prüfung zur Klassifizierung von flammgeschützten Kunststoffen.

Aus den erfindungsgemäßen Siliconformkörpern gemäß der Beispiele 9 bis 16 und den nicht-erfindungsgemäßen Siliconformkörpern gemäß der Vergleichsbeispiele V11 bis V15 und V19 bis V21 wurden jeweils 5" (127 mm) lange und 0,5" (12,7 mm) breite Teststücke ausgestanzt. Die Platte wird am oberen Ende in einer Länge von 1/4" in senkrechter Position befestigt. 12" (305 mm) unter der Testplatte wird ein Stück Baumwollwatte platziert. Der Brenner wird so eingestellt, dass eine blaue Flamme von einer Länge von 3/4" entsteht. Die Flamme wird aus einer Entfernung von 3/8" (9,5 mm) auf den unteren Rand der Kunststoffplatte gerichtet. Nach 10 Sekunden einwirken wird die Flamme entfernt. Die Nachbrennzeit (Gesamtzeit aus Nachbrennen und Nachglühen) des Versuchsstückes wird notiert. Die Probe sollte unmittelbar nach dem Entfernen der Flamme erlöschen und höchstens 4 Sekunden nachbrennen. Der Test wird an 5 verschiedenen Versuchsstücken durchgeführt und der Durchschnittswert der Nachbrennzeit wird ermittelt. Die Ergebnisse sind der Tabelle 2 zu entnehmen.

Bei den nicht-erfindungsgemäßen Vergleichsversuchen V16 bis V18, enthaltend jeweils 62,5 Vol.-% der nicht-erfindungsgemäßen Aluminiumpartikels gemäß der Vergleichsbeispiele V5 bis V7, welche insbesondere das Merkmal b) nicht erfüllen, entstand eine sehr hochviskose Siliconzusammensetzung, welche nicht zu einem geeigneten Siliconformköper verpresst werden konnte.

**Tabelle 2: Zusammensetzung und Brennbarkeit Aluminiumpulverhaltiger Siliconzusammensetzungen**

| **Bsp.** | **Aluminiumpulver gemäß Tabelle 1** | | | **vernetzbare Silicon-zusammensetzung** | | **Siliconformköper** | | |
|---|---|---|---|---|---|---|---|---|
| | **Bsp.** | **Menge (g)** | **Gehalt (Vol.-%)** | **Viskosi-tät (Pa•s)** | **Dichte (g/cm³)** | **Härte** | **Wärme-leitfähig-keit** | **Nach-brennzeit (s)** |
| **9** | 1 | 213,2 | 62,5 | 6,1 | 2,05 | 74 | 1,7 | 3 |
| **10** | 2 | 213,2 | 62,5 | 6,3 | 2,05 | 72 | 2,0 | 1 |
| **11** | 3 | 213,2 | 62,5 | 5,9 | 2,05 | 71 | 1,9 | 0 |
| **12** | 4 | 213,2 | 62,5 | 5,0 | 2,05 | 70 | 2,0 | 2 |
| **13** | 5 | 213,2 | 62,5 | 4,8 | 2,05 | 74 | 1,8 | 0 |
| **14** | 6 | 213,2 | 62,5 | 3,8 | 2,05 | 83 | 1,8 | 2 |
| **15** | 7 | 213,2 | 62,5 | 4,1 | 2,05 | 74 | 1,9 | 2 |
| **16** | 8 | 213,2 | 62,5 | 7,4 | 2,05 | 86 | 2,0 | 3 |
| **V11** | V1 | 213,2 | 62,5 | 10,1 | 2,05 | 75 | 1,9 | 6 |
| **V12** | V2 | 213,2 | 62,5 | 12,5 | 2,05 | 72 | 1,9 | 15 |
| **V13** | V3 | 213,2 | 62,5 | 15,3 | 2,05 | 81 | 1,9 | 5 |
| **V14** | V4 | 213,2 | 62,5 | 13,2 | 2,05 | 83 | 2,0 | 9 |
| **V15** | V8 | 213,2 | 62,5 | 5,2 | 2,05 | 78 | 1,9 | 20 |
| **V16** | V5 | 213,2 | 62,5 | n.b. | n.b. | n.b. | n.b. | n.b. |
| **V17** | V6 | 213,2 | 62,5 | n.b. | n.b. | n.b. | n.b. | n.b. |
| **V18** | V7 | 213,2 | 62,5 | n.b. | n.b. | n.b. | n.b. | n.b. |
| **V19** | V5 | 124,3 | 49,2 | 12,7 | 1,82 | 4 | 1,1 | 21 |
| **V20** | V6 | 124,3 | 49,2 | n.b. | 1,82 | 12 | 1,2 | 23 |
| **V21** | V7 | 124,3 | 49,2 | n.b. | 1,82 | 31 | 1,1 | 70 |
| **V22** | V9 | 213,2 | 62,5 | 12,2 | 2,05 | 87 | 1,9 | 26 |
| **V23** | V10 | 213,2 | 62,5 | 8,3 | 2,05 | 78 | 1,9 | 11 |

Bei der Brennbarkeitsprüfung zeigte sich, dass die Vergleichsbeispiele V11 bis V15 und V19 bis V23, enthaltend ein nicht-erfindungsgemäßes Aluminiumpulver oder eine nicht-erfindungsgemäße Aluminiumpulver-Mischung gemäß der Vergleichsbeispiele V1-V10, welches eines oder mehrere der Merkmale a) bis c) nicht erfüllt, eine vergleichsweise hohe Brennbarkeit zeigen. Insbesondere auffällig war die Brennbarkeit der nicht-erfindungsgemäßen Vergleichsprobe V21, enthaltend ein Aluminiumpulver mit einer mittleren Partikelgröße von weniger als 20 µm. Die Probe brannten nach dem Entfernen der Flamme weiter bis der Formkörper komplett verbrannt war.

Vollkommen unerwartet zeigte sich, dass Aluminiumpulver, die gleichzeitig die Merkmale a) - c) erfüllen, den erfindungsgemäßen Vorteil einer reduzierten Brennbarkeit zeigen. Im erfindungsgemäßen Beispiel 15 zeigte sich zudem völlig überraschend, dass durch Mischen mehrerer nicht-erfindungsgemäßer Aluminiumpulver eine erfindungsgemäße Aluminiumpulver-Mischung erzeugt werden kann, welche die erfindungsgemäßen vorteilhaften Eigenschaften einer geringen Brennbarkeit aufweist, sofern die erhaltene Mischung die Merkmalen a) bis c) erfüllt. Im Gegensatz dazu erfüllt die nicht-erfindungsgemäße Aluminiumpulver-Mischung aus dem Vergleichsbeispiel V8 nicht die Merkmale a) bis c) und zeigt auch nicht die erfindungsgemäßen Vorteile.

### Beispiel 18 Vollständige Brennbarkeitsprüfung gemäß UL 94 V

Die erfindungsgemäßen Siliconformköper aus den erfindungsgemäßen Beispielen 12 und 13 und die nicht-erfindungsgemäßen Siliconformköper aus den nicht-erfindungsgemäßen Vergleichsbeispielen V11, V12 und V20 wurden der vollständigen Brennbarkeitsprüfung gemäß UL 94 V unterzogen und nach V-0, V-1 oder V-2 klassifiziert. Für viele technische Anwendungen, insbesondere für die Anwendung als Gap Filler in Elektrofahrzeugen ist eine Einstufung nach V-0 erforderlich. Die Ergebnisse sind der Tabelle 3 zu entnehmen.

**Tabelle 3: Brennbarkeitsprüfung gemäß UL 94 V**

| Bsp. | Einstufung nach UL 94 V | Bemerkung |
|---|---|---|
| 12 | V-0 | E |
| 13 | V-0 | E |
| V12 | V-1 | NE |
| V13 | V-1 | NE |
| V20 | V-2 | NE |

### Beispiel 19 Herstellung eines vernetzten, thermoleitfähigen Siliconformkörpers enthaltend eine in-situ Mischung von zwei Aluminiumpulver. (erfindungsgemäß)

Gemäß der Allgemeinen Vorschrift AV1 wurde eine erfindungsgemäße vernetzbare thermoleitfähige Siliconzusammensetzung hergestellt, wobei als Aluminiumpulver 191,0 g des erfindungsgemäßen Aluminiumpulver aus Beispiel 1 (37,6 Vol.-% bezogen auf die Gesamtmenge der thermoleitfähigen Siliconzusammensetzung) und 187,4 g eines nicht-erfindungsgemäßen Aluminiumpulvers, welches einen x50 von 106,2 µm und einen SPAN von 0,37 aufweist und mittels Inertgasatomisierung hergestellt und damit im Wesentlichen abgerundet ist, (36,8 Vol.-% bezogen auf die Gesamtmenge der thermoleitfähigen Siliconzusammensetzung) getrennt voneinander zugegeben und *in-situ* unter Bildung einer erfindungsgemäßen Aluminiumpulver-Mischung vermischt wurden.

Es wurde eine erfindungsgemäße reaktive Siliconzusammensetzung mit einem Gehalt an erfindungsgemäßen Aluminiumpartikel von 74,4 Vol.-% und einer dynamischen Viskosität von 58,600 mPa•s bei Scherrate D = 10 s⁻¹ und 25 °C erhalten. Die thermische Leitfähigkeit betrug 4,65 W/mK und die Dichte 2,19 g/cm³. Die erfindungsgemäße Masse weist eine gute Verarbeitbarkeit, eine hohe thermische Leitfähigkeit und eine niedrige Dichte auf und ist sehr gut für die Verwendung als Gap Filler geeignet. Gemäß der Allgemeinen Vorschrift AV1 wurde ein erfindungsgemäßer, vernetzter Siliconformkörper hergestellt. Die Nachbrennzeit gemäß Beispiel 17 betrug 2,1 Sekunden. Gemäß Beispiel 18 erfolgte eine Einstufung nach UL94 V-0.

### Vergleichsbeispiel V24 Herstellung eines vernetzten Siliconformkörpers enthaltend eine in-situ Mischung von zwei Aluminiumpulver. (nicht-erfindungsgemäß)

Gemäß dem erfindungsgemäßen Beispiel 19 wurde ein vernetzter Siliconformkörper hergestellt, jedoch wurden 19,0 Vol.-% des Aluminiumpulver aus Beispiel 1 und 18,6 Vol-% eines nicht-erfindungsgemäßen Aluminiumpulvers, welches einen x50 von 106,2 µm und einen SPAN von 0,37 aufweist und mittels Inertgasatomisierung hergestellt und damit im Wesentlichen abgerundet ist, eingesetzt.

Der nicht-erfindungsgemäße Siliconformkörper hat einen nicht-erfindungsgemäßen Gesamtgehalt an thermoleitfähigen Füllstoff (Z) von 37,6 Vol.-% und weist eine Wärmeleitfähigkeit von 0,45 W/mK auf. Gemäß Beispiel 18 erfolgte eine Einstufung nach UL94 V-1. Die Zusammensetzung ist für die Anwendung als Gap Filler nicht geeignet.

### Beispiel 20 Zweikomponentiger Gap Filler (erfindungsgemäß) Herstellung der A-Komponente

In einem handelsüblichen Labotop Planetenmischer (PC Laborsystem GmbH, Maispracherstrasse 6, 4312 Magden, Schweiz), ausgestattet mit zwei Balkenrührern und einem Abstreifer, wurden 115,4 g eines Vinyldimethylsiloxy-terminierten Polydimethylsiloxans, das eine Viskosität von 120 mPa•s aufweist, und 1,1 g WACKER^{®} CATALYST EP (zu beziehen bei Wacker Chemie AG, Hanns-Seidel-Platz 4, 81737 München, Germany) bei Raumtemperatur und einer Rührergeschwindigkeit von 300 U/min für 5 Minuten gemischt. 308,5 g sphärisches Aluminiumoxid BAK-5 (zu beziehen bei Shanghai Bestry Performance Materials Co., Ltd. Room 209, Yunchuang Space, 325 Yunqiao Road, Pudong, Shanghai) wurden zugegeben und 10 Minuten bei 300 U/min unter leichtem Vakuum (950 mbar) homogen eingearbeitet. Anschließend wurden insgesamt 670,7 g eines erfindungsgemäßen Aluminiumpulvers, welches einen x50 von 79,5 µm und einen SPAN von 1,62 aufweist und mittels Inertgasatomisierung hergestellt und damit im Wesentlichen abgerundet ist, in zwei Portionen (erste Portion 447,1 g, zweite Portion 223,6 g) zugegeben und nach jeder Zugabe wurde 10 Minuten unter leichtem Vakuum (950 mbar) bei 300 U/min gemischt. Die entstandene pastöse Masse wurde weitere 10 Minuten bei 300 U/min unter leichtem Vakuum (950 mbar) homogenisiert. Es wurde eine erfindungsgemäße A-Komponente mit einem Gehalt an erfindungsgemäßen Aluminiumpartikel von 55,5 Vol.-% und einem Gesamtgehalt an thermisch leitfähigen Füllstoff von 73,1 Vol.-% erhalten. Die pastöse Zusammensetzung weist eine Dichte von 2,46 g/cm³, eine dynamische Viskosität von 57800 mPa•s bei Scherrate D = 10 s⁻¹ und 25 °C und eine thermische Leitfähigkeit von 3,2 W/mK auf und ist damit für die Verwendung als Gap Filler sehr gut geeignet.

### Herstellung der B-Komponente

In einem handelsüblichen Labotop Planetenmischer (PC Laborsystem GmbH, Maispracherstrasse 6, 4312 Magden, Schweiz), ausgestattet mit zwei Balkenrührern und einem Abstreifer, wurden 106,5 g eines Vinyldimethylsiloxy-terminierten Polydimethylsiloxans, das eine Viskosität von 120 mPa•s aufweist, und 9,0 g eines Mischpolymerisats aus Dimethylsiloxy- und Methylhydrogensiloxy- und Trimethylsiloxy-Einheiten, das eine Viskosität von 200 mPa•s und einem Gehalt an Si-gebundenem Wasserstoff von 0,18 Gew.-% aufweist, bei Raumtemperatur und einer Rührergeschwindigkeit von 300 U/min für 5 Minuten gemischt. 306,0 g sphärisches Aluminiumoxid BAK-5 (zu beziehen bei Shanghai Bestry Performance Materials Co., Ltd. Room 209, Yunchuang Space, 325 Yunqiao Road, Pudong, Shanghai) wurden zugegeben und 10 Minuten bei 300 U/min unter leichtem Vakuum (950 mbar) homogen eingearbeitet. Anschließend wurden insgesamt 665,2 g eines erfindungsgemäßen Aluminiumpulvers, welches einen x50 von 79,5 µm und einen SPAN von 1,62 aufweist und mittels Inertgasatomisierung hergestellt und damit im Wesentlichen abgerundet ist, in zwei Portionen (erste Portion 443,5 g, zweite Portion 221,7 g) zugegeben und nach jeder Zugabe wurde 10 Minuten unter leichtem Vakuum (950 mbar) bei 300 U/min gemischt. Die entstandene pastöse Masse wurde weitere 10 Minuten bei 300 U/min unter leichtem Vakuum (950 mbar) homogenisiert. Es wurde eine erfindungsgemäße B-Komponente mit einem Gehalt an erfindungsgemäßen Aluminiumpartikeln von 55,5 Vol.-% und einem Gesamtgehalt an thermisch leitfähigen Füllstoff von 73,1 Vol.-% erhalten. Die pastöse Zusammensetzung weist eine Dichte von 2,46 g/cm³, eine dynamische Viskosität von 42800 mPa•s bei Scherrate D = 10 s⁻¹ und 25 °C und eine thermische Leitfähigkeit von 3,5 W/mK auf und ist damit für die Verwendung als Gap Filler sehr gut geeignet.

### Herstellung eines Formkörpers

Ein erfindungsgemäßer vernetzter Probekörper wurde hergestellt, indem 1 Gewichtsteil der erfindungsgemäßen A-Komponente und 1 Gewichtsteil der erfindungsgemäßen B-Komponente homogen vermischt und anschließend gemäß der Allgemeinen Vorschrift AV1 vulkanisiert wurden. Der erhaltene Formkörper weist eine Härte nach Shore A von 1,6 auf. Gemäß Beispiel 18 erfolgte eine Einstufung nach UL94 V-0. Die Zusammensetzung ist für die Anwendung als Gap Filler sehr gut geeignet.

## Patentansprüche

1. Vernetzbare, wärmeleitfähige Siliconzusammensetzung (Y) enthaltend
5-50 Vol.-% einer vernetzbaren Siliconzusammensetzung (S) und 50-95 Vol.-% mindestens eines thermisch leitfähigen Füllstoffes (Z) mit einer Wärmeleitfähigkeit von mindestens 5 W/mK, mit der Maßgabe, dass
die vernetzbare, wärmeleitfähige Siliconzusammensetzung (Y) eine thermische Leitfähigkeit von mindestens 0,6 W/mK hat, und dass
mindestens 20 Vol-% metallische Aluminiumpartikel als thermisch leitfähige Füllstoffe (Z) enthalten sind, welche folgende Merkmale erfüllen:
a) ihr mittlerer Durchmesser x50 liegt im Bereich 30 - 150 µm;
b) sie sind im letzten Herstellschritt über ein Schmelzverfahren hergestellt und sie haben eine überwiegend abgerundete Oberflächenform;
c) ihre Verteilungsbreite SPAN ((x90-x10)/x50) ist mindestens 0,40,
wobei die Wärmeleitfähigkeit und Verteilungsbreite SPAN nach den in der Beschreibung angegebenen Methoden bestimmt werden.

2. Vernetzbare Siliconzusammensetzung (Y) gemäß Anspruch 1, **dadurch gekennzeichnet, dass** es sich um eine additionsvernetzende Siliconzusammensetzung handelt.

3. Vernetzbare Siliconzusammensetzung (Y) gemäß Anspruch 1 oder 2, **dadurch gekennzeichnet, dass** sie mindestens 25 Vol-% metallische Aluminiumpartikel als thermisch leitfähige Füllstoffe (Z) enthält.

4. Vernetzbare Siliconzusammensetzung (Y) gemäß einem der Ansprüche 1 bis 3, **dadurch gekennzeichnet, dass** sie neben den metallischen Aluminiumpartikel nur einen oder zwei weitere thermisch leitfähige Füllstoffe (Z) enthalten.

5. Vernetzbare Siliconzusammensetzung (Y) gemäß einem der Ansprüche 1 bis 4, **dadurch gekennzeichnet, dass** weniger als 16 Gew.-% eines weiteren wärmeleitfähigen Füllstoffs (Z) mit einer Dichte von größer 5,0 g/cm³ enthalten sind.

6. Vernetzbare Siliconzusammensetzung (Y) gemäß einem der Ansprüche 1 bis 5, **dadurch gekennzeichnet, dass** der mittlere Durchmesser x50 der metallischen Aluminiumpartikel im Bereich von 40 - 130 µm liegt.

7. Vernetzbare Siliconzusammensetzung (Y) gemäß einem der Ansprüche 1 bis 6, **dadurch gekennzeichnet, dass** der metallische Aluminiumpartikel weniger als 20 Gew-% einer Partikelfraktion mit einem Durchmesser von kleiner oder gleich 20 µm bezogen auf die Gesamtmenge an Aluminiumpartikel enthält.

8. Vernetzbare Siliconzusammensetzung (Y) gemäß einem der Ansprüche 1 bis 7, **dadurch gekennzeichnet, dass** sie eine Wärmeleitfähigkeit mindestens 0,8 W/mK aufweist.

9. Vernetzbare Siliconzusammensetzung (Y) gemäß einem der Ansprüche 1 bis 8, **dadurch gekennzeichnet, dass** sie eine nach der in der Beschreibung angegebenen Methode bestimmte dynamische Viskosität von 1 000 - 750 000 mPa•s aufweist, jeweils bei Scherrate D = 10 s⁻¹ und 25 °C.

10. Verfahren zur Herstellung der erfindungsgemäßen vernetzbaren Siliconzusammensetzungen gemäß einem der Ansprüche 1 bis 9 durch Vermischen der einzelnen Komponenten.

11. Siliconprodukt erhältlich durch Abfüllen oder Auftragen und anschließendes Aushärten der erfindungsgemäßen vernetzbaren Siliconzusammensetzungen gemäß einem der Ansprüche 1 bis 9.

12. Verwendung der vernetzbaren Siliconzusammensetzung gemäß einem der Ansprüche 1 bis 9 als Gap Filler (=wärmeleitendes Element), Wärmeleitpad, wärmeleitfähige Klebstoffe und Vergussmassen.

13. Verwendung gemäß Anspruch 12 als Gap Filler für Lithium-Ionen-Batterien von Elektrofahrzeugen.

14. Verwendung gemäß Anspruch 12 als Vergussmasse in Elektrofahrzeugen.

## Claims

1. Crosslinkable, heat-conducting silicone composition (Y) comprising
5-50% by volume of a crosslinkable silicone composition (S) and 50-95% by volume of at least one thermally conductive filler (Z) having a thermal conductivity of at least 5 W/mK, with the proviso that
the crosslinkable, heat-conducting silicone composition (Y) has a thermal conductivity of at least 0.6 W/mK, and that
at least 20% by volume of metallic aluminium particles present as thermally conductive fillers (Z) fulfils the following features:
a) the median diameter x50 thereof is in the range of 30-150 µm;
b) they are produced in the last production step via a melting process and have a predominately rounded surface shape;
c) the distribution range SPAN ((x90-x10)/x50) thereof is at least 0.40,
where thermal conductivity and distribution range SPAN are determined by the methods specified in the description.

2. Crosslinkable silicone composition (Y) according to Claim 1, **characterized in that** it is an additioncrosslinking silicone composition.

3. Crosslinkable silicone composition (Y) according to Claim 1 or 2, **characterized in that** it contains at least 25% by volume of metallic aluminium particles as thermally conductive fillers (Z).

4. Crosslinkable silicone composition (Y) according to any of Claims 1 to 3, **characterized in that** it contains only one or two further thermally conductive fillers (Z) aside from the metallic aluminium particles.

5. Crosslinkable silicone composition (Y) according to any of Claims 1 to 4, **characterized in that** less than 16% by weight of a further thermally conductive filler (Z) having a density of greater than 5.0 g/cm³ is present.

6. Crosslinkable silicone composition (Y) according to any of Claims 1 to 5, **characterized in that** the median diameter x50 of the metallic aluminium particles is in the range of 40-130 µm.

7. Crosslinkable silicone composition (Y) according to any of Claims 1 to 6, **characterized in that** the metallic aluminium particle contains less than 20% by weight of a particle fraction having a diameter of not more than 20 µm based on the total amount of aluminium particles.

8. Crosslinkable silicone composition (Y) according to any of Claims 1 to 7, **characterized in that** it has a thermal conductivity of at least 0.8 W/mK.

9. Crosslinkable silicone composition (Y) according to any of Claims 1 to 8, **characterized in that** it has a dynamic viscosity, determined by the method specified in the description, of 1000-750 000 mPa•s, in each case at shear rate D = 10 s⁻¹ and 25°C.

10. Process for producing the inventive crosslinkable silicone compositions according to any of Claims 1 to 9 by mixing the individual components.

11. Silicone product obtainable by dispensing or applying and then curing the inventive crosslinkable silicone compositions according to any of Claims 1 to 9.

12. Use of the crosslinkable silicone composition according to any of Claims 1 to 9 as a gap filler (= heat-conducting element), heat-conducting pad, heat-conducting adhesives and encapsulating compounds.

13. Use according to Claim 12 as a gap filler for lithium ion batteries of electrical vehicles.

14. Use according to Claim 12 as encapsulating compound in electrical vehicles.

## Revendications

1. Composition de silicone réticulable thermiquement conductrice (Y) contenant
5 à 50 % en volume d'une composition de silicone réticulable (S) et 50 à 95 % en volume d'au moins une charge thermiquement conductrice (Z) ayant une conductivité thermique d'au moins 5 W/mK, à condition que la composition de silicone thermiquement conductrice réticulable (Y) présente une conductivité thermique d'au moins 0,6 W/mK, et que
au moins 20 % en volume de particules métalliques d'aluminium soient contenues en tant que charges thermiquement conductrices (Z), qui satisfont aux caractéristiques suivantes :
a) leur diamètre moyen x50 se situe dans la plage de 30 à 150 µm ;
b) elles sont fabriquées au cours de la dernière étape de fabrication par un procédé de fusion et elles ont une forme de surface principalement arrondie ;
c) leur largeur de distribution SPAN ((x90-xl0)/x50) est d'au moins 0,40,
la conductivité thermique et la largeur de distribution SPAN étant déterminées selon les méthodes indiquées dans la description.

2. Composition de silicone réticulable (Y) selon la revendication 1, **caractérisée en ce qu'**il s'agit d'une composition de silicone réticulant par addition.

3. Composition de silicone réticulable (Y) selon la revendication 1 ou 2, **caractérisée en ce qu'**elle contient au moins 25 % en volume de particules métalliques d'aluminium en tant que charges thermiquement conductrices (Z).

4. Composition de silicone réticulable (Y) selon l'une quelconque des revendications 1 à 3, **caractérisée en ce qu'**elle ne contient, outre les particules métalliques d'aluminium, qu'une ou deux autres charges thermiquement conductrices (Z).

5. Composition de silicone réticulable (Y) selon l'une quelconque des revendications 1 à 4, **caractérisée en ce qu'**elle contient moins de 16 % en poids d'une autre charge thermiquement conductrice (Z) ayant une densité supérieure à 5,0 g/cm³.

6. Composition de silicone réticulable (Y) selon l'une quelconque des revendications 1 à 5, **caractérisée en ce que** le diamètre moyen x50 des particules métalliques d'aluminium se situe dans la plage de 40 à 130 µm.

7. Composition de silicone réticulable (Y) selon l'une quelconque des revendications 1 à 6, **caractérisée en ce que** les particules métalliques d'aluminium contiennent moins de 20 % en poids d'une fraction de particules ayant un diamètre inférieur ou égal à 20 µm par rapport à la quantité totale de particules d'aluminium.

8. Composition de silicone réticulable (Y) selon l'une quelconque des revendications 1 à 7, **caractérisée en ce qu'**elle présente une conductivité thermique d'au moins 0,8 W/mK.

9. Composition de silicone réticulable (Y) selon l'une quelconque des revendications 1 à 8, **caractérisée en ce qu'**elle présente une viscosité dynamique, déterminée selon la méthode indiquée dans la description, de 1 000 à 750 000 mPa·s, dans les deux cas à un taux de cisaillement D = 10 s⁻¹ et à 25 °C.

10. Procédé de fabrication des compositions de silicone réticulables selon l'invention, selon l'une quelconque des revendications 1 à 9, par mélange des composants individuels.

11. Produit de silicone pouvant être obtenu par remplissage ou application puis durcissement des compositions de silicone réticulables selon l'invention selon l'une quelconque des revendications 1 à 9.

12. Utilisation de la composition de silicone réticulable selon l'une quelconque des revendications 1 à 9 en tant que bouche-trou (= élément thermiquement conducteur), tampon thermiquement conducteur, adhésifs thermiquement conducteurs et masses de scellement.

13. Utilisation selon la revendication 12 en tant que bouche-trou pour des batteries lithium-ion de véhicules électriques.

14. Utilisation selon la revendication 12 en tant que masse d'encapsulation dans des véhicules électriques.
